(19) Europäisches Patentamt
European Patent Office
Office européen des brevets

(11) Numéro de publication: **0 274 968 B1**

(12) **FASCICULE DE BREVET EUROPEEN**

(45) Date de publication de fascicule du brevet: **14.08.91**

(51) Int. Cl.5: **C08F 222/40**, C08G 73/12, C08F 216/14

(21) Numéro de dépôt: **87420334.2**

(22) Date de dépôt: **14.12.87**

Le dossier contient des informations techniques présentées postérieurement au dépôt de la demande et ne figurant pas dans le présent fascicule.

# (54) Polymères à groupements imides faits à partir de diamines encombrées et leurs procédés de préparation.

(30) Priorité: **17.12.86 FR 8617918**

(43) Date de publication de la demande: **20.07.88 Bulletin 88/29**

(45) Mention de la délivrance du brevet: **14.08.91 Bulletin 91/33**

(84) Etats contractants désignés: **AT BE CH DE ES FR GB IT LI LU NL SE**

(56) Documents cités: **EP-A- 122 149**
**FR-A- 2 094 607**

(73) Titulaire: **RHONE-POULENC CHIMIE**
**25, quai Paul Doumer**
**F-92408 Courbevoie Cédex(FR)**

(72) Inventeur: **Barthelemy, Pascal**
**21, rue de la Part-Dieu**
**F-69003 Lyon(FR)**

(74) Mandataire: **Trolliet, Maurice et al**
**RHONE-POULENC INTERSERVICES Service Brevets Chimie Centre de Recherches des Carrières B.P. 62**
**F-69192 Saint-Fons Cédex(FR)**

**EP 0 274 968 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a pour objets de nouveaux polymères thermostables dont l'obtention met en jeu des bis-imides et des diamines encombrées. Elle concerne également des procédés de préparation de ces polymères.

On a déja décrit des polymères obtenus par réaction entre un N,N'-bis-imide d'acide dicarboxylique insaturé tel que par exemple un N,N'-bis-maléimide avec une diamine biprimaire [brevet français n° 1 555 564]. Les quantités de N,N'-bis-imide et de diamine sont choisies de façon que le rapport :

$$\frac{\text{nombre de moles de bis-imide}}{\text{nombre de moles de diamine}}$$

soit au moins égal à 1 ; par ailleurs on préfère généralement qu'il soit inférieur à 50. On obtient des résines thermostables qui résistent remarquablement aux contraintes thermiques sévères.

Il est également indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploie d'une solution.

Finalement, il est mentionné que pour de nombreux emplois, il est avantageux d'opérer en deux temps ; dans un premier stade, on prépare un prépolymère par chauffage du mélange intime des deux réactifs à une température de l'ordre de 100 à 250° C. Le prépolymère obtenu peut être utilisé à l'état de solution, de suspension, de poudre ou bien être conformé encore par simple coulée à chaud. Dans un second stade, on peut provoquer le durcissement du prépolymère par chauffage jusqu'à des températures de l'ordre de 300° C, éventuellement sous pression.

Ces polymères peuvent être convertis en films ou en matériaux multicellulaires. Ils sont d'un intérêt tout particulier pour la préparation d'objets moulés éventuellement en association avec des charges fibreuses ou pulvérulentes ou de stratifiés à base de fibres minérales (fibres simples, tissu ou non-tissé de fibres) telles que par exemples des fibres de carbone, de bore ou de verre. Cependant la préparation et la mise en oeuvre de ces polymères nécessitent de prendre des précautions sur le plan de l'hygiène lorsque la diamine biprimaire utilisée est de nature aromatique du fait de la toxicité que peuvent présenter certaines d'entre elles.

Pour pallier à cet inconvénient, la demanderesse à mis au point de nouveaux polymères à groupements imides qui font appel, pour leur préparation, à des diamines aromatiques ne présentant pas les risques de toxicité dont on a parlé ci-avant.

Plus précisément la présente invention concerne des polymères à groupements imides caractérisés en ce qu'ils comprennent le produit de réaction, à une température allant de 50° C à 300° C, entre :

- (a) un N,N'-bis-imide ou une association de plusieurs bis-imides de formule :

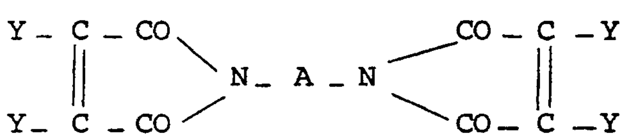

(I)

dans laquelle :

. les symboles Y, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

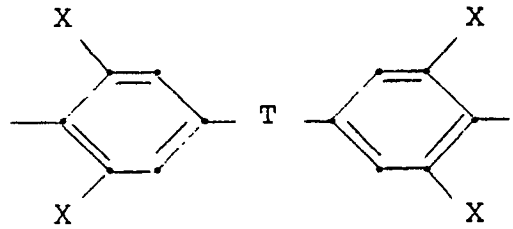

dans laquelle T représente un lien valentiel simple ou un groupement ;

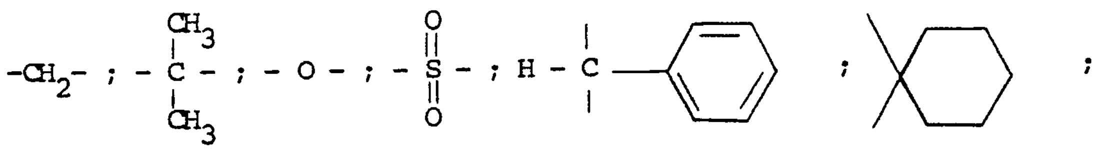

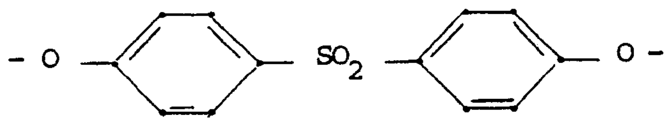

et les symboles X, identiques ou différents, représentent chacun un atome d'hydrogène, un radical méthyle, éthyle ou isopropyle ;

- (b) une ou plusieurs diamines biprimaires encombrées prises dans le groupe formé par :

(i) les espèces répondant à la formule générale :

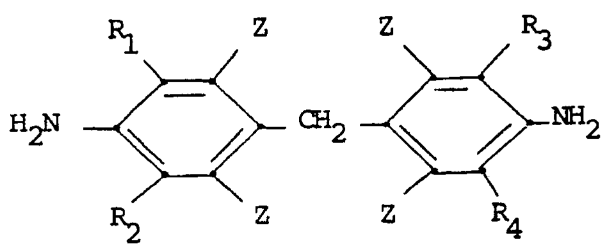

(II)

dans laquelle :

. les symboles $R_1$, $R_2$, $R_3$ et $R_4$, identiques ou différents, représentent chacun un radical méthyle, éthyle, propyle ou isopropyle ;

. les symboles Z, identiques ou différents, représentent chacun un atome d'hydrogène ou un atome de chlore ;

(2i) et les espèces répondant à la formule générale :

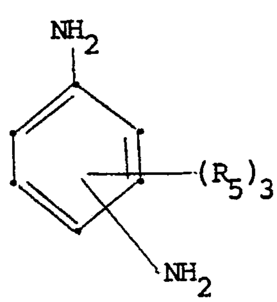

(III)

dans laquelle :

. les radicaux amino sont en position méta ou para, l'un par rapport à l'autre ;

. les symboles $R_5$, identiques ou différents, représentent chacun un radical méthyle, éthyle,

propyle ou isopropyle ;

- (c) éventuellement un ou plusieurs monomères autres qu'un bis-imide de formule (I) et comportant une ou plusieurs doubles liaisons carbone-carbone polymérisables ;
- et (d) éventuellement un composé de type imidazole.

A titre d'exemples spécifiques de bis-imides de formule (I), on peut citer en particulier :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,

Ces bis-maléimides peuvent être préparés selon les procédés décrits dans le brevet américain n° 3 018 290 et le brevet anglais n° 1 137 290. On utilise de préférence, pour la mise en oeuvre de la présente invention, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

A titre d'exemples spécifiques de diamines encombrées de formules (II) et (III), on peut citer en particulier :

- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le diamino-4,4' dichloro-2,2' tétraéthyl-3,3',5,5' diphénylméthane,
- le diamino-1,3 diéthyl-2,4 méthyl-6 benzène,
- le diamino-1,3 méthyl-2 diéthyl-4,6 benzène,
- et leur mélanges.

Ces diamines encombrées peuvent être préparées selon les procédés décrits dans le brevet anglais n° 852.651 et le brevet américain n° 3.481.900. On utilise de préférence, pour la mise en oeuvre de la présente invention, le diamino-4,4' tétraéthyl-3,3',5,5' diphénylméthane, le diamino-4,4' diéthyl-3,3' diméthyl-5,5' diphénylméthane et leurs mélanges.

Les quantités de N',N-bis-imide(s) (a) et de diamine(s) encombrée(s) (b) sont choisies de façon à ce que le rapport r :

$$\frac{\text{nombre de moles de bis-imide(s) (a)}}{\text{nombre de moles de diamine(s) (b)}}$$

se situe dans l'intervalle allant de 1,1/1 à 20/1 et, de préférence, allant de 2/1 à 5/1.

L'encombrement stérique des diamines selon l'invention conduit à une faible réactivité des constituants du milieu de polymérisation, ce qui permet d'atteindre la gélification des prépolymères et le durcissement complet des résines au bout de durées plus longues que celles observées avec les polyimides conforme au brevet français n° 1 555 564, notamment ceux issus de N,N'-4,4'-diphénylméthane-bis-maléimide et de diamino-4,4' diphénylméthane. Cette réactivité plus faible des constituants du milieu de polymérisation selon la présente invention peut présenter un intérêt particulier pour la réalisation de pièces moulées par coulée des prépolymères, pour la réalisation de pièces selon la technique de l'enroulement filamentaire et enfin pour la mise en oeuvre de méthode d'enduction en voie fondue (dite hot melt) ; les viscosités obtenues pour les prépolymères à l'état fondu sont tout à fait acceptables pour les transformateurs et leur évolution au cours du temps est faible.

Par ailleurs, vis-à-vis des polyimides obtenus selon le brevet français n° 1 555 564 par chauffage notamment de N,N'-4,4'-diphénylméthane-bis-maléimide et de diamino-4,4' diphénylméthane, on a constaté

que le choix des diamines encombrées conformes à la présente invention permet d'obtenir de façon inattendu des polymères durcis présentant une conservation du module de flexion à chaud qui est aussi bonne et même peut être supérieure.

Il peut être avantageux dans certains cas de modifier les polymères selon la présente invention par emploi d'un réactif copolymérisable (c). Comme réactif facultatif (c) qui convient bien, on peut citer en particulier :

*quand on souhaite par exemple abaisser la fluidité du milieu de polymérisation :

($c_1$)soit un ou plusieurs monomères de formule :

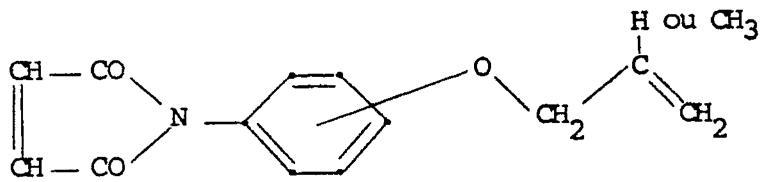

(IV)

dans laquelle le radical allyloxy ou méthallyloxy est en position ortho, métha ou para par rapport à l'atome de carbone du cycle benzénique relié à l'azote ;

($c_2$) soit un composé comprenant :

- un mélange d'un monomère de formule :

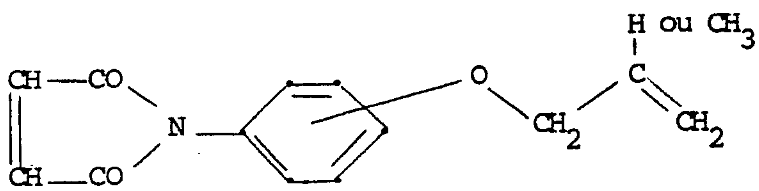

(IV)

dans laquelle le radical allyloxy ou méthallyloxy est en position ortho, méta ou para par rapport à l'atome de carbone du cycle benzénique relié à l'azote.

- avec :
  . au moins un dérivé monosubstitué de formule :

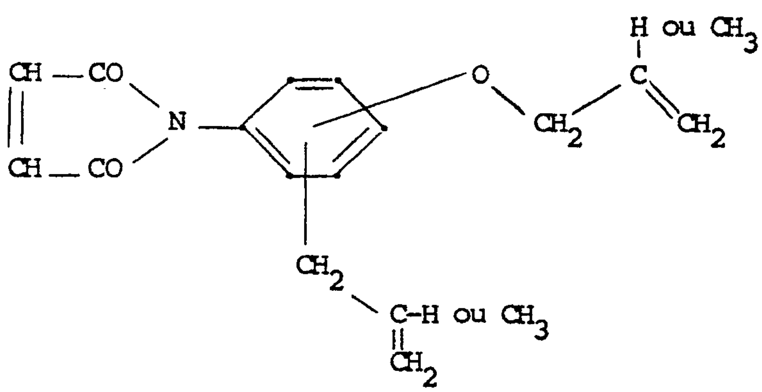

(V)

  . et éventuellement un ou plusieurs dérivés disubstitués de formule :

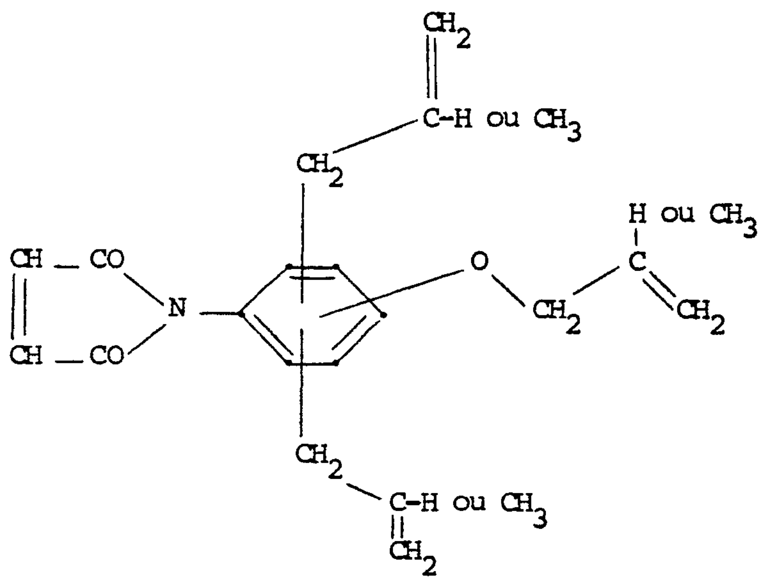

(VI)

Dans le composé précité servant de réactif ($c_2$), les proportions des divers constituants du mélange des produits de formules (IV), (V) et éventuellement (VI) peuvent varier dans des larges limites. De manière générale, les proportions des constituants sont choisies entre les limites suivantes (exprimant le pourcentage pondéral de chacun des consituants dans le mélange) :

- au moins 30 %, et de préférence de 50 % à 80 % de N-(méth)allyloxyphénylmaléimide de formule (IV),
- de 5% à 50% et de préférence de 10 % à 35 % de dérivé(s) mono-(méth)allyl substitué(s) de formule (V),
- et de 0 % à 20 % et de préférence de 0 % à 15 % de dérivé(s) di-(méth)allyl substitué(s) de formule (VI),

la somme des constituants devant dans chaque cas être égale à 100 % en poids.

*quand on souhaite par exemple améliorer d'avantage les propriétés de flexion à chaud :

($c_3$) un ou plusieurs hétérocycles substitués.

S'agissant du réactif facultatif ($c_1$), il est choisi parmi :

- le N-(allyloxy-2 phényl)maléimide,
- le N-(allyloxy-3 phényl)maléimide,
- le N-(allyloxy-4 phényl)maléimide,
- le N-(méthallyloxy-2 phényl)maléimide,
- le N-(méthallyloxy-3 phényl)maléimide,
- le N-(méthallyloxy-4 phényl)maléimide,
- et leurs mélanges.

Les maléimides de formule (IV) sont des produits nouveaux qui peuvent être notamment préparés à partir des aminophénols (ortho, méta ou para), selon la réaction de Claisen.

On peut par exemple faire réagir l'aminophénol, dont on a préalablement bloqué la fonction amine par réaction avec l'anhydride acétique pour former l'acétamidophénol, avec selon le cas un halogénure d'allyle (le plus souvent le bromure) ou de méthallyle en solution dans l'acétone et en présence de carbonate dipotassique. La fonction amine est ensuite régénérée par hydrolyse.

On prépare ensuite de manière classique le maléimide correspondant en faisant réagir en solution l'allyloxyaniline ou la méthallyloxyaniline obtenue précédemment avec l'anhydride maléique, en présence d'anhydride acétique, de triéthylamine et d'un sel de nickel (acétate de nickel en particulier).

On obtient ainsi le N-(allyloxyphényl)-maléimide ou le N-(méthallyloxyphényl)-maléimide.

Le N-(allyloxy-4 phényl)maléimide est un solide de couleur jaune moutarde ayant un point de fusion de 103° C environ.

L'analyse RMN est en accord avec la structure suivante :

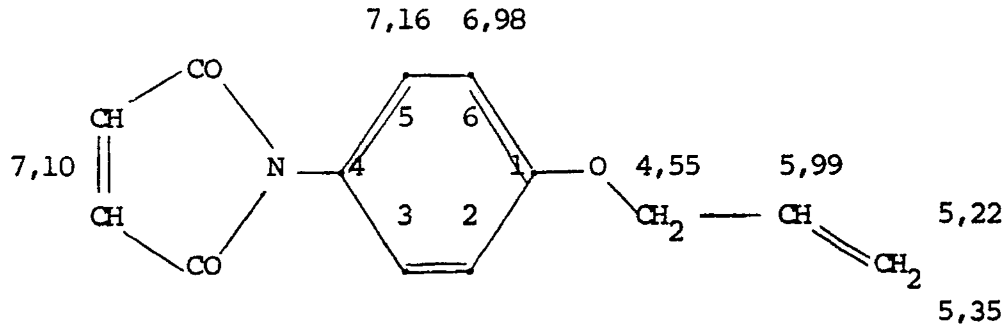

RMN 1H ; solvant : DMSO d6 ; référence : hexaméthyldisiloxane (HMDS)

7,16 (2H,m) : H 3,5 ;
7,10 (2H,s) : maléimido ;
6,98 (2H,m) : H 2,6 ;
5,99 (1H,m) : -CH= ;
5,35 et 5,22 (2H,dd) : $=CH_2$ ;
4,55 (2H,d) : $OCH_2$.

Le N-(allyloxy-3 phényl)maléimide est un liquide jaune orange visqueux, qui cristallise lentement à température ambiante et qui bout à 150 °C environ sous une pression 20 Pa.

L'analyse RMN est en accord avec la structure suivante :

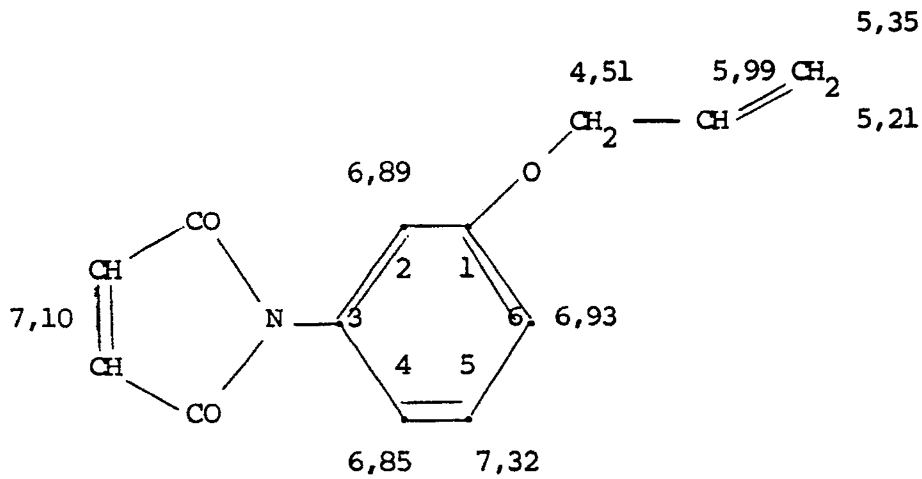

RMN 1H ; solvant : DMSO d6 ; référence : HMDS

6,85, 6,89 et 6,93 (3H,m) : H2, H2 et H6 ;
7,10 (2H,s) : maléimido ;
7,32 (1H,t) : H5 ;
5,99 (1H,m) : -CH= ;
5,35 et 5,21 (2H,dd) : $=CH_2$ ;
4,51 (2H,d) : $OCH_2$.

Le N-(allyloxy-2-phényl)maléimide est un solide cristallisé jaune clair, ayant un point de fusion d'environ 82 °C et un point d'ébullition de 148 °C à 155 °C sous une pression de 20 Pa.

L'analyse RMN est en accord avec la structure suivante :

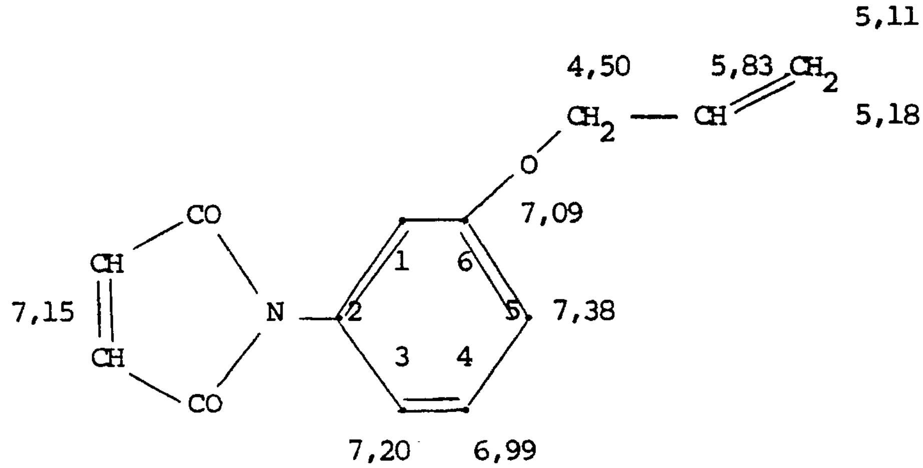

RMN 1H ; solvant : DMSO d6 ; référence : HMDS

7,38 (1H,dt) : H5 ;
7,20 (1H,dd) : H3 ;
7,15 (2H,s) : maléimido ;
7,09 (1H,dd) : H6 ;
6,99 (1H,dt) : H4 ;
5,83 (1H,m) : -CH= ;
5,18 et 5,11 (2H,dd) : $=CH_2$ ;
4,50 (2H,d) : $OCH_2$.

Le N-(méthallyloxy-4 phényl) maléimide est un solide de couleur beige ayant un point de fusion de 64° C.

L'analyse RMN est en accord avec la structure suivante :

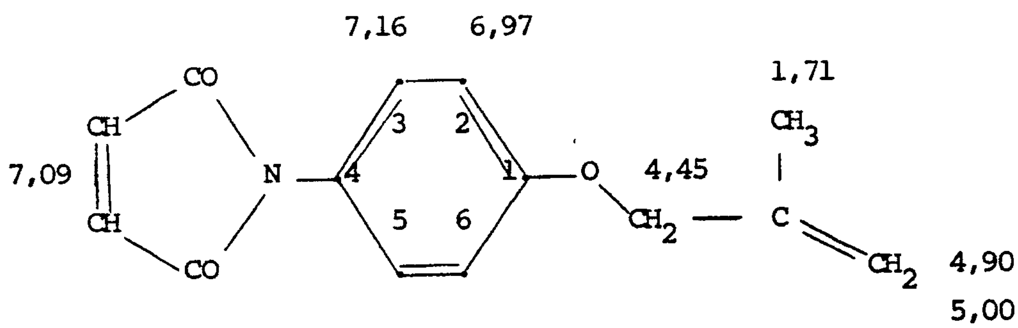

RMN 1H ; solvant : DMSO d6 ; référence : HMDS

7,16 (2H,d) : H 3,5 ;
7,09 (2H,s) : maléimido ;
6,97 (2H,d) : H 2,6 ;
4,90 et 5,00 (1H,s) : $CH_2=$ ;
4,45 (2H,s) : $OCH_2$ ;
1,71 (3H,s) : $CH_3$.

Le N-(méthallyloxy-3 phényl) maléimide est un solide de couleur beige ayant un point de fusion de 39° C.

L'analyse RMN est en accord avec la structure suivante :

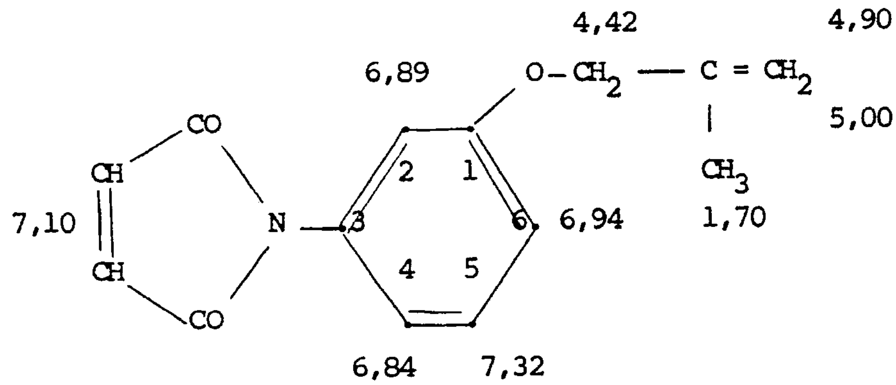

RMN 1H ; solvant : DMSO d6 ; référence : HMDS

7,32 (1H,t) : H5 ;

7,10 (2H,s) : maléimido ;

6,94 (1H,d) : H6 ;

6,89 (1H,s) : H2 ;

6,84 (1H,d) : H4 ;

4,90 et 5,00 (1H,l) : $CH_2=$ ;

4,42 (2H,s) : $OCH_2$ ;

1,70 (3H,s) : $CH_3$.

Le N-(méthallyloxy-2 phényl) maléimide est un solide de couleur beige ayant un point de fusion de 96° C.

L'analyse RMN est en accord avec la structure suivante :

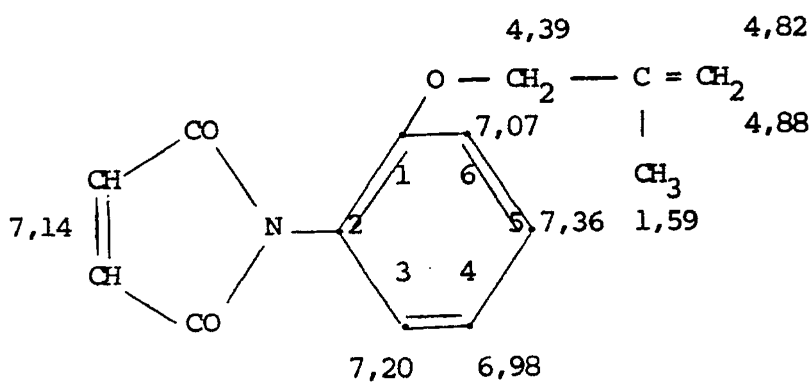

RMN 1H ; solvant : DMSO d6 ; référence : HMDS

7,36 (1H,t) : H5 ;

7,20 (1H,d) : H3 ;

7,14 (2H,s) : maléimido ;

7,07 (1H,d) : H6 ;

6,98 (1H,t) : H4 ;

4,82 et 4,88 (1H,s) : $CH_2=$ ;

4,39 (2H,s) : $OCH_2$ ;

1,59 (3H,s) : $CH_3$.

S'agissant du réactif facultatif ($c_2$), on utilise de préférence comme composé comprenant un mélange de N-(méth)allyloxyphénylmaléimide de formule (IV) avec un ou plusieurs dérivés de substitution (méth)-allylés de formule(s) (V) et éventuellement (VI), le produit brut obtenu par mise en oeuvre du procédé original ci-après défini.

Ce procédé est caractérisé en ce qu'il consiste à réaliser les 3 étapes suivantes qui sont enchaînées dans le même réacteur :

- la première étape consiste à faire réagir en milieu solvant un aminophénol avec de l'anhydride maléique en opérant à une température allant de 20° C à 200° C, pendant une durée allant, selon la température choisie, de 30 minutes à 2 heures et elle conduit à un premier milieu réactionnel comprenant un acide N-(hydroxylphényl)maléamique ;

- la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une tmepérature allant de 40° C à 150° C et elle conduit, après acidification et élimination de la phase aqueuse, à un second milieu réactionnel organique comprenant un acide N-[(méth)allyloxyphényl] maléamique, un ou plusieurs acides N-[-(méth)allyloxy,(méth)allylphényl]maléamiques et éventuellement un ou plusieurs acides N-[(méth)-allyloxy,di(méth)allylphényl]maléamiques ;
- la troisième étape consiste à réaliser une réaction de cyclisation des acides maléamiques précités en faisant réagir le second milieu réactionnel précité avec un anhydride d'acide carboxilique inférieur, en présence d'une amine tertiaire et éventuellement d'un catalyseur, puis à éliminer le solvant de la réaction et elle conduit à un produit brut de réaction qui est un composé comprenant un mélange formé de : au moins 30 % en poids et de préférence de 50 % à 80 % en poids de N-(méth)-allyloxyphénylmaléimide, de 5 % à 50 % en poids et de préférence de 10 % à 35 % en poids d'un ou plusieurs N-[méthallyloxy,(méth)allylphényl]maléimides et de 0 % à 20 % en poids et de préférence de 0 % à 15 % en poids d'un ou plusieurs N-[(méth)allyloxy,di(méth)allylphényl]-maléimides.

Les 3 étapes qui viennent d'être décrites sont enchaînées dans un solvant unique pour une plus grande simplicité du procédé, mais il est possible d'opérer un changement de solvant, au cours de telle ou telle étape, sans inconvénient. Le choix du solvant peut être très large, mais, comme la deuxième étape est réalisée en milieu biphasique hydro-organique, il peut être souhaitable de mettre en oeuvre un solvant organique non miscible à l'eau, ce qui simplifie considérablement le traitement de la masse réactionnelle. Parmi les solvants miscibles ou non miscibles à l'eau utilisables, on donnera en fait la préférence à ceux qui dissolvent, dans les conditions de température adoptées pour la synthèse, l'aminophénol de départ. Parmi ces solvants, on peut citer par exemple : les alcools (comme par exemple : méthanol, éthanol, butanol) ; les cétones (comme par exemple : acétone, méthyléthylcétone, méthylisobutylcétone) ; les nitriles (comme par exemple : benzonitrile, propionitrile, acétonitrile) ; les esters (comme par exemple : acétate d'éthyle, de butyle) ; des solvants aromatiques (comme par exemple : anisole, chlorobenzène) ; des hydrocarbures halogènés (comme par exemple : chloroforme, dichlorométhane, dichloroéthane).

S'agissant de la première étape du procédé, on peut dire que la concentration des réactifs de départ dans le solvant utilisé n'est pas critique. On n'a pas intérêt tout de même ni à trop diluer pour des raisons de productivité, ni à trop concentrer pour avoir une bonne agitabilité. Dans cette première étape l'anhydride maléique est utilisé en quantités au moins égales à une mole par mole d'aminophénol ; on utilise généralement des quantités plus importantes qui sont de l'ordre de 1,01 à 1,5 moles par mole d'aminophénol. De plus la température se situe de préférence entre 40° C et 60° C.

S'agissant de la deuxième étape, on commence par ajouter dans le milieu réactionnel la quantité d'une solution aqueuse alcaline, par exemple d'une solution aqueuse de NaOH, nécessaire d'une part pour salifier l'acide N-(hydroxyphényl) maléamique et d'autre part pour obtenir le pH désiré. Le pH sera maintenu constant pendant toute la réaction par ajout de soude ; de manière préférentielle, le pH est ajusté et maintenu à une valeur constante comprise entre 10 et 12. La réaction d'allylation est réalisée de préférence avec le bromure ou le chlorure de (méth)allyle. La quantité d'halogénure de (méth)allyle est de l'ordre de 1,5 à 10 moles par groupement molaire OH phénolique et, de préférence, de l'ordre de 2 à 4 . L'excès de ce réactif peut être récupéré en fin d'opération et recyclé dans une opération suivante. Le temps de coulée de l'halogénure de (méth)allyle n'est pas critique et il peut se situer dans l'intervalle allant de 1 heure à 5 heures, et, de préférence, allant de 2 heures à 4 heures. Dans cette deuxième étape, la température se situe de préférence entre 60° C et 100° C. A noter qu'en fin d'étape la phase aqueuse est acidifiée jusqu'à un pH environ égal à 1 par des acides habituels, de préférence des oxyacides ou des hydracides minéraux. La couche aqueuse est éliminée et on laisse dans le réacteur la couche organique.

S'agissant de la troisième étape du procédé, on utilise, avantageusement comme anhydride d'acide carboxylique inférieur, l'anhydride acétique en quantités au moins égales à une mole par groupement molaire HOOC-CH=CH-CO-NH- à cycliser. On utilise généralement des quantités plus importantes qui sont de l'ordre de 1,05 à 1,5 moles par groupement maléamique.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N,N-diméthylaniline sont d'un emploi avantageux. Les quantités d'amine tertiaire se situent entre 0,05 et 2 moles par groupement molaire HOOC-CH = CH-CO-NH-.

En tant que catalyseurs, on peut utiliser par exemple des sels de nickel d'acides carboxyliques, éventuellement hydratés ainsi que les formes chélatées de ce métal. L'acétate et l'acétylacétonate

conviennent particulièrement bien. Ces catalyseurs sont employés en quantités très faibles, de l'ordre de 0,05 à 1,5 g par groupement molaire HOOC-CH = CH-CO-NH- et, de préférence, de l'ordre de 0,1 à 0,8 g.

Dans cette troisième étape, la température n'est pas critique et n'a une incidence que sur la cinétique de la réaction. Cette température peut être comprise par exemple entre 40° C et 150° C et, de préférence, entre 60° C et 80° C. En fin de cette étape, le solvant est éliminé par distillation sous vide et on obtient le produit brut de réaction ayant l'aspect d'une huile.

Conformément à une modalité très préférée de mise en oeuvre de la présente invention, le procédé précité s'applique bien, au départ de métaaminophénol, à la préparation des composés comprenant des mélanges à base de :
N-[(méth)allyloxy-3 phényl]maléimide + N-[(méth)allyloxy-3 (méth)allyl-4 phényl]maléimide + N-[(méth)-allyloxy-3(méth)allyl-6 phényl]maléimide + éventuellement N-[(méth)allyloxy-3 di(méth)allyl-4,6 phényl]-maléimide.

A noter qu'au départ d'orthoaminophénol, on est conduit à des composés comprenant des mélanges à base de :
N-[(méth)allyloxy-2 phényl]maléimide + N-[(méth)allyloxy-2 (méth)allyl-3 phényl]maléimide + N-[(méth)-allyloxy-2 (méth)allyl-5 phényl]maléimide + éventuellement N-[(méth)allyloxy-2 di(méth)allyl -3,5 phényl]-maléimide. A noter encore qu'au départ de paraminophénol, on est conduit à des composés comprenant des mélanges à base de :
N-[(méth)allyloxy-4 phényl]maléimide + N-[(méth)allyloxy-4 (méth)allyl-3 phényl]maléimide + éventuellement N-[(méth)allyloxy-4 di(méth)allyl-3,5 phényl]maléimide.

S'agissant du réactif facultatif ($c_3$), il est choisi parmi : les vinylpyridines, la N-vinylpyrrolidone, l'isocyanurate d'allyle, le vinyltétrahydrofuranne.

S'agissant de la quantité du réactif facultatif (c), elle représente généralement moins de 60 % et, de préférence, de 5 % à 50 % du poids total des réactifs (a) et (b).

La réactivité des constituants (a), (b) et éventuellement (c) du milieu de polymérisation selon l'invention peut être accrue, par exemple lorsque les applications envisagées demandent de réaliser des opérations de moulage par injection sur machine, par addition d'un catalyseur (d) de type imidazole.

Le composé imidazole (d) facultatif répond à la formule générale :

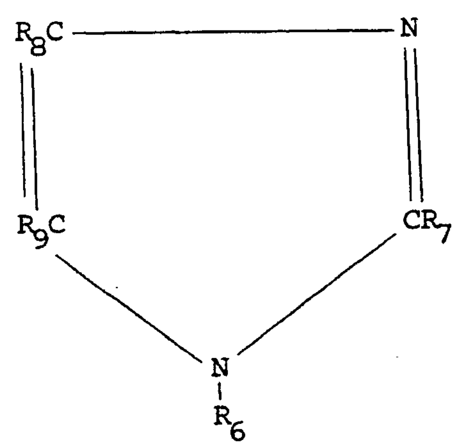

(VII)

dans laquelle $R_6$, $R_7$, $R_8$ et $R_9$, identiques ou différents, représentent chacun : un atome d'hydrogène, un radical alkyle ou alcoxy ayant de 1 à 20 atomes de carbone, vinyle, phényle, nitro, $R_8$ pouvant former avec $R_9$ et les atomes de carbone auxquels sont liés ces radicaux un cycle unique comme par exemple un cycle benzénique, $R_6$ pouvant également représenter un groupement carbonyle lié à un deuxième cycle imidazole.

Comme exemples spécifiques de composés imidazole (d), on peut citer en particulier : l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole, le carbonyldiimidazole.

Le composé imidazole facultatif est utilisé en quantités catalytiques. Selon la nature du composé imidazole et selon la vitesse de polymérisation souhaitée au stade de la mise en oeuvre, on utilise le composé imidazole à un taux se situant dans l'intervalle allant de 0,01 à 1 % en poids par rapport à l'ensemble des réactifs (a) + (b) + éventuellement (c) et, de préférence, allant de 0,05 à 0,5 %.

Les polymères selon l'invention peuvent être préparées par chauffage direct du ou des bis-imide(s) (a), du réactif aminé (b) et éventuellement du réactif (c) avec au besoin le composé imidazole (d) au moins

jusqu'à l'obtention d'un mélange liquide homogène. La température peut varier en fonction de l'état physique des composés en présence mais elle se situe généralement entre 50° C et 300° C. Il est avantageux d'amener et de maintenir les composés de départ dans un état de mélange intime avant et pendant le chauffage à l'aide par exemple d'une bonne agitation. Quand on utilise le composé imidazole (d), celui-ci est de préférence ajouté au départ dans le mélange réactionnel bien agité contenant les réactifs (a) et/ou (b). Lorsque ce composé est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser comme solvant ou diluant un des liquides organiques polaires dont on parle ci-après.

La préparation des polymères selon l'invention peut aussi être effectuée par chauffage du mélange des réactifs au sein d'un diluant organique qui est liquide dans une partie au moins de l'intervalle 50° C - 250° C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, la cyclohexanone, le méthylglycol et la méthyl-éthylcétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120° C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200° C [en général ce point de ramollissement est compris entre 50° et 150° C]. Ces prépolymères peuvent être obtenus en masse en chauffant le mélange des réactifs jusqu'à l'obtention d'un produit homogène ou pâteux à une température généralement située entre 50° et 180° C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du composé imidazole (d) et il s'agit de celle indiquée ci-avant à propos de la préparation directe de polymères durcis. La préparation des polymères peut également être effectuée en suspension ou en solution dans un diluant qui est liquide dans une partie au moins de l'intervalle 50° - 180° C.

Dans le cas où l'on choisit de faire appel au réactif facultatif (c), il faut noter que ces prépolymères (P) peuvent également être obtenus en formant, à partir du ou des bis-imide(s) (a) et du réactif (c), un prépolymère (PP) qui est ensuite mis à réagir avec le réactif aminé (b) et au besoin le composé imidazole (d). On peut encore préparer au préalable un prépolymère (P'P') en chauffant le mélange de réactif aminé (b), de réactif (c) et au besoin de composé imidazole (d), puis en le faisant réagir avec le ou les bis-imide(s) (a) pour obtenir le prépolymère (P). Les conditions de température et de durée utilisées pour la préparation des prépolymères (PP) ou (P'P') et pour leur transformation en prépolymères (P) sont celles indiquées ci-avant à propos de la préparation des prépolymères (P) par mélange direct des réactifs (a), (b) et éventuellement (c) avec au besoin le composé imidazole (d).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300° C, généralement comprises entre 150° et 300° C; une mise en forme complémentaire peut être effectuée pendant le durcissement, éventuellement sous vide ou sous une pression super-atmosphérique, ces opérations pouvant également être consécutives.

Dans le cas où l'on choisit de faire appel au réactif facultatif (c), on ne sort pas du cadre de l'invention si l'on prépare des polymères selon l'invention, qui ne sont pas sous l'aspect de prépolymères (P), en utilisant un mélange intime de prépolymère (PP), de réactif aminé (b) et au besoin de composé imidazole (d) ou un mélange intime de prépolymère (P'P') et de bis-imide(s) (a) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des températures de 200° à 300° C. A titre d'exemples, ils conviennent pour la fabrication d'isolants en plaques ou tubulaires pour transformateurs électriques, de supports de circuits imprimés, de pignons, de bagues etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être de pièces de révolution sont obtenues par placage de plusieurs couches de préimprégnés sur une forme ou un support. On peut utiliser aussi les préimprégnés comme renforts ou comme moyen de réparation de pièces détériorées. Il est aussi possible de concevoir des pièces selon les techniques de l'enroulement filamentaire avec ou sans support ; il est encore possible de faire du moulage par injection ou de la pultrusion. On rappellera que pour faire par exemple des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymlère (P), il peut être moulé par simple coulée à chaud où par injection et on provoque ensuite son durcissement par chauffage.

Les exemples suivants sont donnés à titre illustratif mais non limitatif.

EXEMPLE 1

Dans un réacteur en verre muni d'une tubulure latérale et d'un agitateur de type ancre, on introduit à température ambiante :

- 76 g (0,212 mole) de N,N'-4,4'-diphénylméthane-bis-maléimide,
- et 24 g (0,085 mole) de diamino-4,4' diéthyl-3,3' diméthyl-5,5' diphénylméthane (le rapport r égal à 2,5/1).

On plonge le réacteur dans un bain d'huile préchauffé à 160° C et on laisse réagir ainsi 45 minutes, dont les 5 dernières sont opérées sous une pression réduite de $13,3.10^2$ Pa.

On coule ensuite la masse réactionnelle dans un moule préchauffé à 150° C. On peut ainsi préparer des plaques de dimensions 140 × 100 × 4 mm qui vont subir le cycle de cuisson suivant :

. 100 minutes entre 150° C et 250° C,
. 18 heures à 250° C,
. et 2 heures entre 250° C et 25° C.

Après démoulage, les plaques à base de polymère durci sont découpées pour obtenir des éprouvettes de dimensions 30 × 7 × 4 mm sur lesquelles on mesure la résistance à la rupture (Rf) et le module (Mf) en flexion (appareil INSTRON avec distance entre appuis de 25,4 mm).

A titre d'essai comparatif, on a reproduit les opérations décrites ci-avant, mais en utilisant les réactifs suivants :

- 147,4 g (0,412 mole) de N,N'-4,4'-diphénylméthane-bis-maléimide,
- et 32,6 g (0,165 mole) de diamino-4,4' diphénylméthane (le rapport r est égal à 2,5/1).

Ces réactifs sont introduits en 4 minutes dans le réacteur préchauffé à 160° C. La masse obtenue est homogène. On dégaze ensuite pendant 1 minute, puis on laisse réagir à 160° C pendant 9 minutes supplémentaires.

Les valeurs des propriétés en flexion sont rassemblées dans les tableaux suivant :

| | Résistance en flexion (MPa) | | | | Module en flexion (MPa) | | | |
|---|---|---|---|---|---|---|---|---|
| | initiale | | après 1000 h à 250° C | | initial | | après 1000 h à 250° C | |
| | à 25°C | à 250°C | à 25°C | à 250°C | à 25°C | à 250°C | à 25°C | à 250°C |
| EX 1 | 119 | 53 | 138 | 70 | 3120 | 1900 | 3400 | 2800 |
| Essai | 226 | 93,2 | 159 | 135 | 3400 | 1500 | 3200 | 2500 |

Par ailleurs, on a mesuré les temps de gel des prépolymères conformes à l'exemple 1 et à l'essai comparatif donné. Le temps de gel est mesuré dans chaque cas sur 10 g du mélange des poudres de bis imide et de diamine, à l'aide d'un appareil SUNSHINE : le temps zéro est défini par la plongée du tube contenant le mélange des poudres dans un bain thermostaté à la température de mesure. Les résultats sont les suivants :

- Temps de gel à 160° C du prépolymère selon l'exemple 1 : 100 minutes;
- Temps de gel à 160° C du prépolymère selon l'essai comparatif : 15 minutes.

EXEMPLES 2 A 5

Dans un réacteur en verre muni d'un agitateur de type ancre, on introduit à température ambiante 1,83 g (0,006 mole) de diamino-4,4′ diéthyl-3,3′ diméthyl-5,5′ diphénylméthane et des quantités variables d'imidazole : exemple 2 : absence d'imidazole ; exemple 3 : 0,005 g ; exemple 4 : 0,010 g ; et exemple 5 : 0,015 g.

On homogénéise la masse réactionnelle en 30 secondes à 160° C. On refroidit et on introduit 8,17 g (0,022 mole) de N,N′-4,4′-diphénylméthane-bis-maléimide (le rapport r est égal à 3,6/1). On plonge à nouveau le réacteur dans un bain à 160° C et l'on détermine sur appareil SUNSHINE le temps mis à partir de cet instant par le mélange réactionnel pour gélifier.

| EXEMPLE | % en poids d'imidazole | Temps de gel à 160° C |
|---|---|---|
| 2 | 0 | 100 min |
| 3 | 0,05 | 43 min |
| 4 | 0,10 | 22,7 min |
| 5 | 0,15 | 10,7 min |

Il apparaît que les prépolymères selon la présente invention offrent suivant le taux de catalyseur une large marge de réactivité et il est possible d'ajuster aisément cette réactivité à la valeur souhaitée suivant les utilisations envisagées. On pourra donc utiliser les prépolymères obtenus aussi bien pour des mises en oeuvre nécessitant des temps de réaction très courts (par exemple injection sur machine) que pour des mises en oeuvre nécessitant des temps de réaction moyens à longs (par exemple : enduction hot melt ; injection dans des renforts compacts constitués par des fibres tressées dans plusieurs directions).

EXEMPLE 6

Dans le réacteur de l'exemple 1, on introduit à température ambiante 19,9 g (0,064 mole) de diamino-4,4′ tétraéthyl-3,3′,5,5′ diphénylméthane, et 0,15 g d'imidazole.

On plonge le réacteur dans un bain d'huile préchauffé à 160° C et on homogénéise la masse réactionnelle durant 4 minutes.

On incorpore alors en 3 minutes 80,1 g (0,224 mole) de N,N′-4,4′-diphénylméthane-bis-maléimide (le rapport r est égal à 3,5/1). On applique ensuite une pression réduite de 2600 Pa durant 3 minutes. On laisse la masse réactionnelle réagir encore 5 minutes. Le prépolymère obtenu est ensuite coulé, moulé, durci et testé comme indiqué ci-avant à l'exemple 1.

Résultats de flexion sur les éprouvettes en polymère durci :

- à 25° C : Rf = 140 MPa
  Mf = 3100 MPa
- à 250° C : Rf = 53 MPa
  Mf = 2000 MPa

**Revendications**

**Revendications pour les Etats contractants suivants : AT, BE, CH, DE, FR, GB, IT, LI, LU, NL, SE**

**1.** Polymères à groupements imides caractérisés en ce qu'ils comprennent le produit de réaction, à une température allant de 50 °C à 300 °C, entre :

- (a) un N,N'-bis-imide ou une association de plusieurs bis-imides de formule :

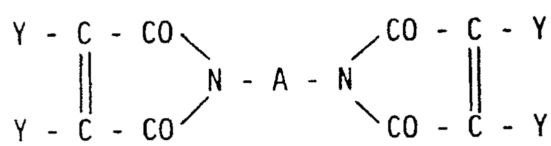

(I)

dans laquelle :

. les symboles Y, identiques ou différents, représentent chacun M, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5

phénylène-1,3 ; diéthyl-2,5 méthyl-3 phénylène-1,4 ; et les radicaux de formule :

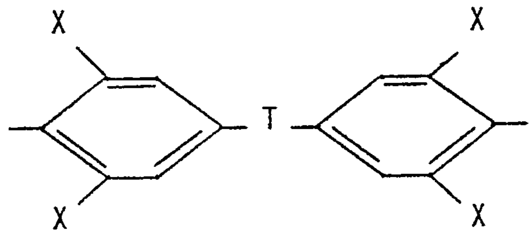

dans laquelle T représente un lien valentiel simple ou un groupement :

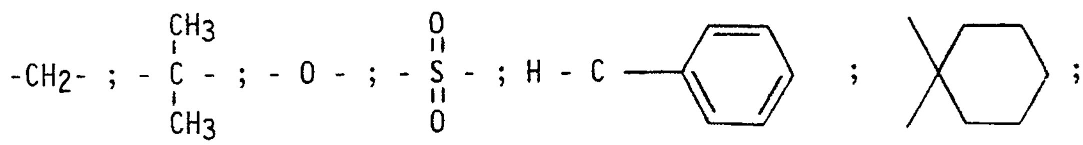

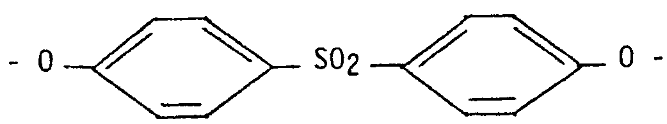

et les symboles X, identiques ou différents, représentent chacun un atome d'hydrogène, un radical méthyle, éthyle ou isopropyle ;

- (b) une ou plusieurs diamines biprimaires encombrées prises dans le groupe formé par :

(i) les espèces répondant à la formule générale :

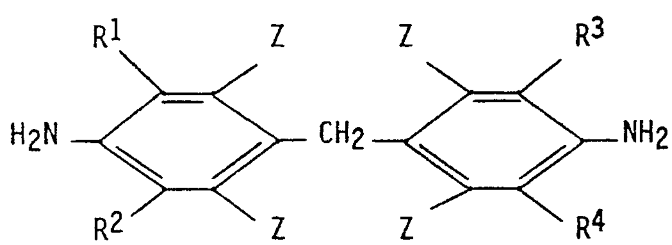

(II)

dans laquelle :

. les symboles $R^1$, $R^2$, $R^3$ et $R^4$, identiques ou différents, représentent chacun un radical méthyle, éthyle, propyle ou isoproyle ;

. les symboles Z, identiques ou différents, représentent chacun un atome d'hydrogène ou un atome de chlore ;

(2i) et les espèces répondant à la formule générale :

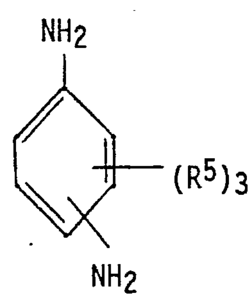

(III)

dans laquelle :

. les radicaux amino sont en position méta ou para, l'un par rapport à l'autre ;

  . les symboles $R^5$, identiques ou différents, représentent chacun un radical méthyle, éthyle, propyle ou isopropyle ;
- (c) éventuellement un ou plusieurs monomères autres qu'un bis-imide de formule (1) et comportant une ou plusieurs doubles liaisons carbone-carbone polymérisables ;
- et (d) éventuellement un composé de type imidazole, les quantités de N',N'-bis-imide(s) (a) et de diamine(s) encombrée(s) (b) étant choisies de façon à ce que le rapport r :

$$\frac{\text{nombre de moles de bis-imide(s) (a)}}{\text{nombre de moles de diamine(s) (b)}}$$

se situe dans l'intervalle allant de 1,1/1 à 20/1 et, de préférence, allant de 2/1 à 5/1.

**2.** Polymères selon la revendication 1, caractérisés en ce que le réactif (c), quand on en utilise un, consiste dans les espèces suivantes :
($c_1$) - un ou plusieurs monomères de formule :

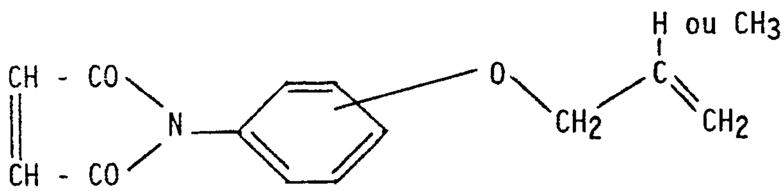

(IV)

dans laquelle le radical allyloxy ou méthallyloxy est en position ortho, métha ou para par rapport à l'atome de carbone du cycle benzénique relié à l'azote ;
($c_2$) - un composé comprenant :
- un mélange d'un monomère de formule :

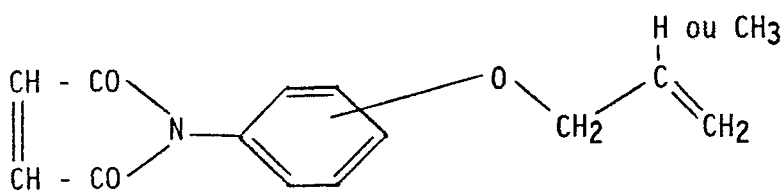

(IV)

dans laquelle le radical allyloxy ou méthallyloxy est en position ortho, métha ou para par rapport à l'atome de carbone du cycle benzénique relié à l'azote.
- avec :
  . au moins un dérivé monosubstitué de formule :

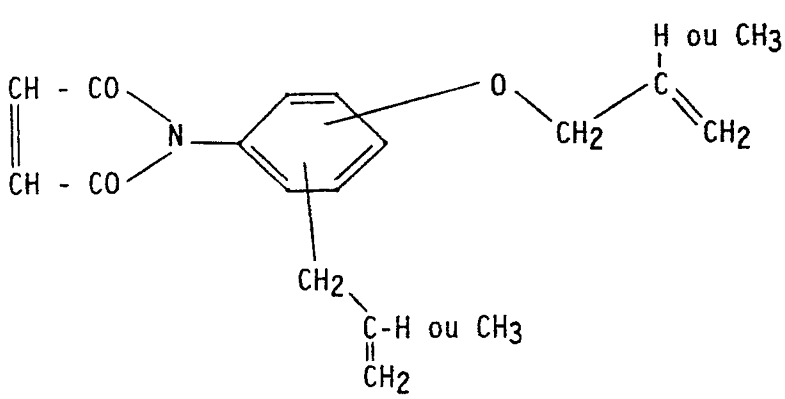

(V)

  . et éventuellement un ou plusieurs dérivés disubstitués de formule :

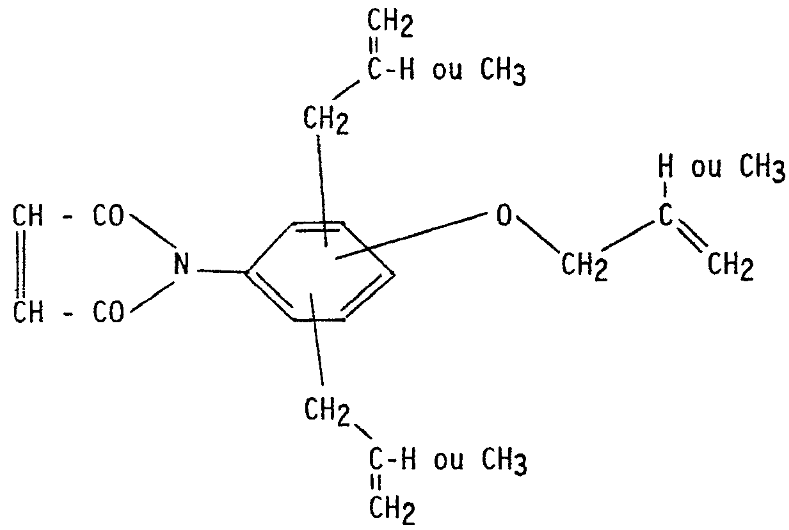

(VI)

($c_3$) - un ou plusieurs hétérocycles substitués, choisis parmi les vinylpyridines, la N-vinylpyrrolidone, l'isocyanurate d'allyle, le vinyltétrahydrofuranne.

3. Polymères selon l'une quelconque des revendications 1 et 2, caractérisés en ce que le dérivé imidazole (d), quand on en utilise un, répond à la formule générale :

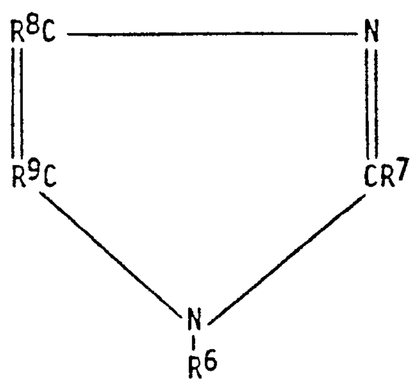

(VII)

dans laquelle $R^6$, $R^7$, $R^8$ et $R^9$, identiques ou différents, représentent chacun : un atome d'hydrogène, un radical alkyle ou alcoxy ayant de 1 à 20 atomes de carbone, vinyle, phényle, nitro, $R^8$ pouvant former avec $R^9$ et les atomes de carbone auxquels sont liés ces radicaux un cycle unique comme par exemple un cycle benzénique, $R^6$ pouvant également représenter un groupement carbonyle lié à un deuxième cycle imidazole.

4. Polymères selon la revendication 2, caractérisé sen ce que la quantité du réactif facultatif (c), représentent moins de 60 %, et de préférence, de 5 % à 50 % du poids total des réactifs (a) et (b).

5. Polymères selon la revendication 3, caractérisés en ce qu'on utilise le composé imidazole à un taux se situant dans l'intervalle allant de 0,01 à 1 % en poids par rapport à l'ensemble des réactifs (a) + (b) + éventuellement (c) et, de préférence, allant de 0,05 à 0,5 %.

6. Polymères selon l'une quelconque des revendication 1 à 5, caractérisés en ce qu'ils se trouvent sous forme de polymères durcis, insolubles dans les solvants tels que le dioxanne, le tétrahydrofuranne et l'oxyde de dibutyle, le diméthylformamide, le diméthylsulfoxyde, la N-méhtylpyrrolidone, le diméthylacétamide, la cyclohexanone, le méthylglycol et la méthyl-éthyl-cétone, ces polymères ne présentant pas de ramollissement notable au-dessous de la température à laquelle ils commencent à se dégrader.

7. Polymères selon l'une quelconque des revendications 1 à 5, caractérisés en ce qu'ils se trouvent sous forme de prépolymères thermodurcissables (P) solubles dans les solvants organiques polaires et

présentent un point de ramollissement à une température inférieure à 200° 6.

**8.** Procédé de préparation de polymères durcis selon les revendications 1 à 6, caractérisé en ce que l'on chauffe directement le mélange des réactifs à une température comprise entre 50° C et 300° C.

**9.** Procédé de préparation selon la revendication 8, caractérisé en ce qu'il consiste à chauffer le mélange des réactifs entre 50° C et 180° C pour former dans un premier temps un prépolymère (P), puis à provoquer le durcissement du prépolymère (P) par chauffage à une température comprise entre 150° C et 300° C.

**10.** Procédé de préparation de prépolymères thermodurcissables (P) selon les revendications 1 à 5 et 7, caractérisé en ce que l'on chauffe directement le mélange des réactifs à une température comprise entre 50° C et 180° C jusqu'à l'obtention d'un produit homogène liquide ou pâteux.

**11.** Application des polymères selon l'une quelconque des revendications 1 à 7 à la fabrication d'objets moulés, de revêtements, d'articles à structure cellulaire et de matériaux composites renforcés et imprégnés.

**Revendications pour l'Etat contractant suivant : ES**

**1.** Procédé de préparation de polymères à groupements imides se trouvant sous forme de polymères durcis, insolubles dans les solvants tels que le dioxanne, le tétrahydrofuranne, l'oxyde de dibutyle, le diméthylformamide, le diméthylsulfoxyde, la N-méthylpyrrolidone, le diméthylacétamide, la cyclohexanone, le méthylglycol et la méthyl-éthyl-cétone et ne présentant pas de ramollissement notable audessous de la température à laquelle ils commencent à se dégrader, caractérisé par le fait que l'on chauffe directement à une température comprise entre 50° C et 300° C le mélange des réactifs suivants :

(a) - un N,N'-bis-imide ou une association de plusieurs bis-imides de formule :

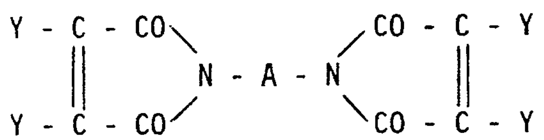

(I)

dans laquelle :

. les symboles Y, identiques ou différents, représentent chacun H, $CH_3$ ou Cl ;
. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

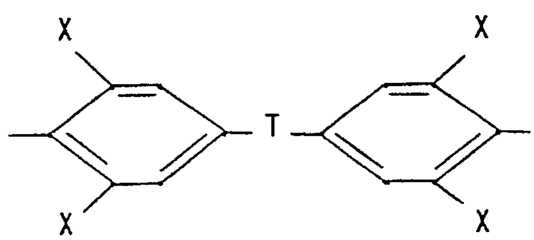

dans laquelle T représente un lien valentiel simple ou un groupement :

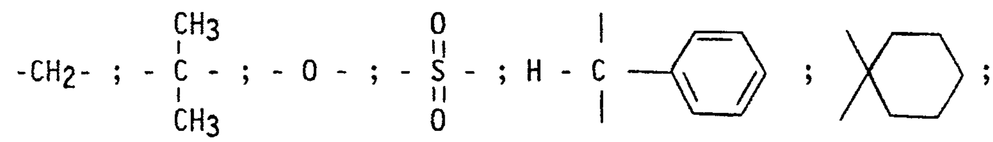

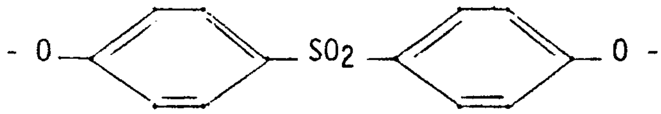

et les symboles X, identiques ou différents, représentent chacun un atome d'hydrogène, un radical méthyle, éthyle ou isopropyle ;

(b) - une ou plusieurs diamines biprimaires encombrées prises dans le groupe formé par :

(i) les espèces répondant à la formule générale :

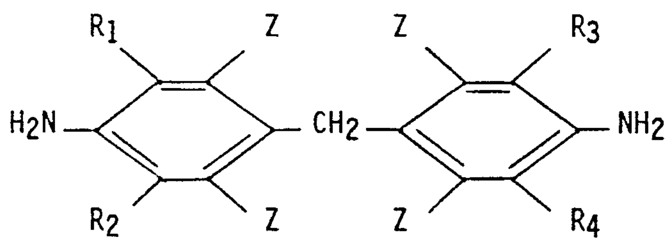 (II)

dans laquelle :

. les symboles $R_1$, $R_2$, $R_3$ et $R_4$, identiques ou différents, représentent chacun un radical méthyle, éthyle, propyle ou isoproyle ;

. les symboles Z, identiques ou différents, représentent chacun un atome d'hydrogène ou un atome de chlore ;

(2i) et les espèces répondant à la formule générale :

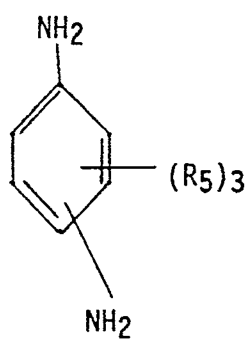 (III)

dans laquelle :

. les radicaux amino sont en position méta ou para, l'un par rapport à l'autre ;

. les symboles $R_5$, identiques ou différents, représentent chacun un radical méthyle, éthyle, propyle ou isopropyle ; .

(c) - éventuellement un ou plusieurs monomères autres qu'un bis-imide de formule (I) et comportant une ou plusieurs doubles liaisons carbone-carbone polymérisables ;

- et (d) éventuellement un composé de type imidazole ;
- les quantités de N',N-bis-imide(s) (a) et de diamine(s) encombrée(s) (b) étant choisies de façon à ce que le rapport r :

$$\frac{\text{nombre de moles de bis-imide(s) (a)}}{\text{nombre de moles de diamine(s) (b)}}$$

se situe dans l'intervalle allant de 1,1/1 à 20/1 et, de préférence, allant de 2/1 à 5/1.

**2.** Procédé de préparation de polymères à groupements imides se trouvant sous forme de prépolymères thermodurcissables (P), solubles dans les solvants organiques polaires et présentant un point de ramollissement à une température inférieure à 200 °C, caractérisé par le fait que l'on chauffe directement le mélange des réactifs (a), (b) et éventuellement (c) et (d) définis ci-avant dans la revendication 1 à une température comprise entre 50 °C et 180 °C jusqu'à l'obtention d'un produit homogène liquide ou pâteux.

**3.** Procédé selon la revendication 1, caractérisé en ce qu'il consiste à chauffer le mélange des réactifs entre 50 °C et 180 °C pour former dans un premier temps un prépolymère (P), puis à provoquer le durcissement du prépolymère (P) par chauffage à température comprise entre 150 °C et 300 °C.

**4.** Procédé selon l'une quelconque des revendications 1 à 3, caractérisé en ce que le réactif (c), quand on en utilise un, consiste dans les espèces suivantes :

($c_1$) - un ou plusieurs monomères de formule :

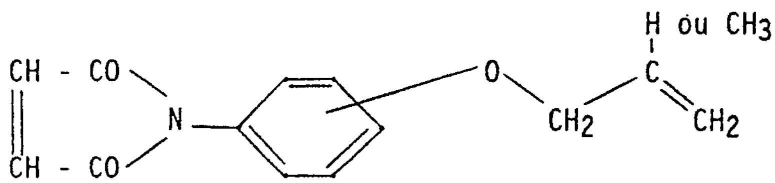

(IV)

dans laquelle le radical allyloxy ou méthallyloxy est en position ortho, métha ou para par rapport à l'atome de carbone du cycle benzénique relié à l'azote ;

($c_2$) - un composé comprenant :

- un mélange d'un monomère de formule :

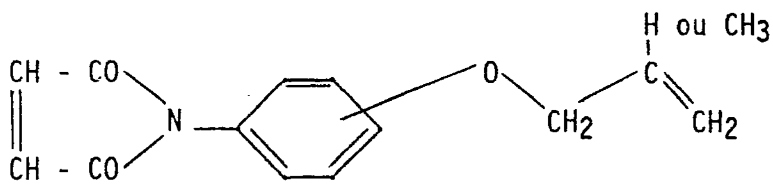

(IV)

dans laquelle le radical allyloxy ou méthallyloxy est en position ortho, métha ou para par rapport à l'atome de carbone du cycle benzénique relié à l'azote.

- avec :
  . au moins un dérivé monosubstitué de formule :

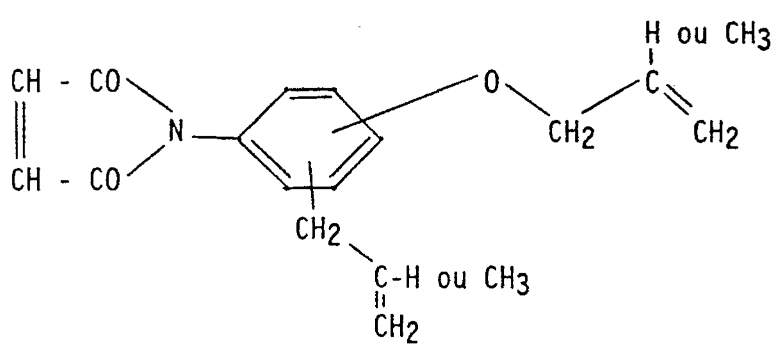

(V)

. et éventuellement un ou plusieurs dérivés disubstitués de formule :

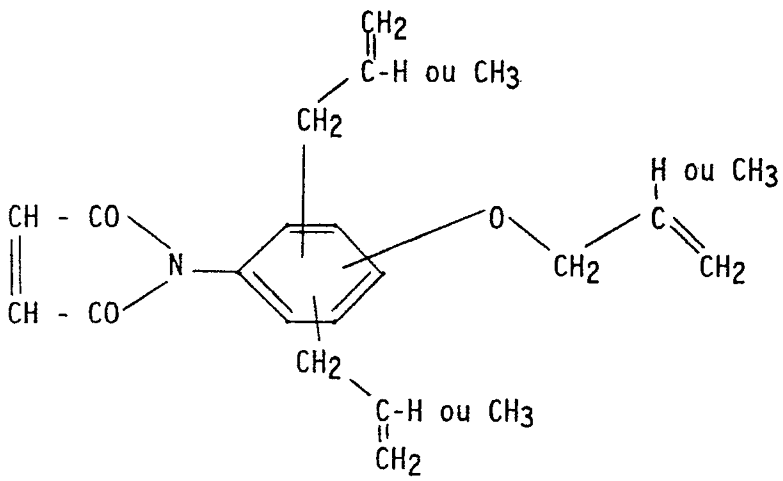

(VI)

($c_3$) - un ou plusieurs hétérocycles substitués choisis parmi les vinylpyridines, la N-vinylpyrrolidone, l'isocyanurate d'allyle et le vinyltétrahydrofuranne.

**5.** Procédé selon l'une quelconque des revendications 1 à 4, caractérisé en ce que le dérivé imidazole (d), quand on en utilise un, répond à la formule générale :

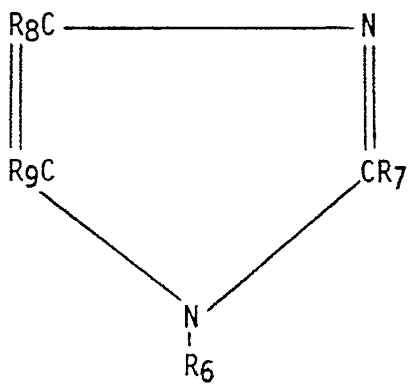

(VII)

dans laquelle $R_6$, $R_7$, $R_8$ et $R_9$, identiques ou différents, représentent chacun : un atome d'hydrogène, un radical alkyle ou alcoxy ayant de 1 à 20 atomes de carbone, vinyle, phényle, nitro, $R_8$ pouvant former avec $R_9$ et les atomes de carbone auxquels sont liés ces radicaux un cycle unique comme par exemple un cycle benzénique, $R_6$ pouvant également représenter un groupement carbonyle lié à un deuxième cycle imidazole.

**6.** Procédé selon la revendication 4, caractérisé en ce que la quantité du réactif facultatif (c), représente moins de 60 % et, de préférence, de 5 % à 50 % du poids total des réactifs (a) et (b).

**7.** Procédé selon la revendication 5, caractérisé en ce qu'on utilise le composé imidazole à un taux se situant dans l'intervalle allant de 0,01 à 1 % en poids par rapport à l'ensemble des réactifs (a) + (b) + éventuellement (c) et, de préférence, allant de 0,05 à 0,5 %.

**8.** Application des polymères préparés selon l'une quelconque des revendications 1 à 7 à la fabrication d'objets moulés, de revêtements, d'articles à structure cellulaire et de matériaux composites renforcés et imprégnés.

**Claims**

**Claims for the following Contracting States : AT, BE, CH, DE, FR, GB, IT, LI, LU, NL, SE**

1. Polymers containing imide groups, characterised in that they comprise the product of reaction, at a temperature ranging from 50 ° C to 300 ° C, between:

(a) an N,N'-bis(imide) or a combination of several bis(imides) of formula:

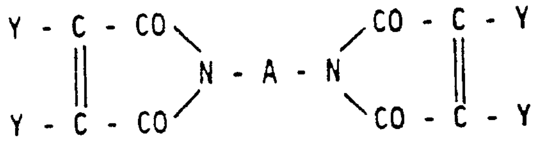 (I)

in which:

the symbols Y, which may be identical or different, each denote H, $CH_3$ or Cl;

the symbol A denotes a divalent radical chosen from the group consisting of the following radicals: cyclohexylenes; phenylenes; 4-methyl-1,3-phenylene; 2-methyl-1,3-phenylene; 5-methyl-1,3-phenylene; 2,5-diethyl-3-methyl-1,4-phenylene; and the radicals of formula:

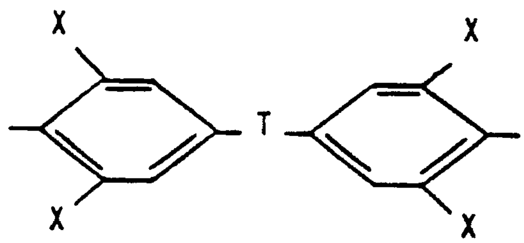

in which T denotes a single valency bond or a group:

-$CH_2$- ; 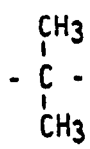 ; -O- ; 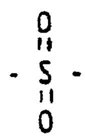 ; 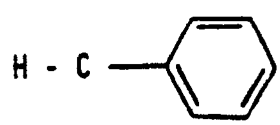 ; 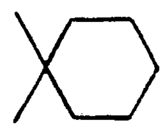 ;

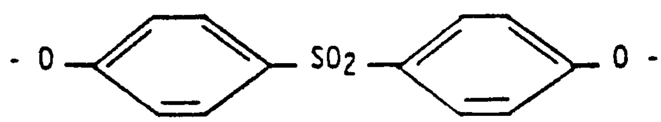

and the symbols X, which may be identical or different, each denote a hydrogen atom or a methyl, ethyl or isopropyl radical;

(b) one or more hindered diprimary diamines selected from the group composed of:

(i) a species corresponding to the general formula:

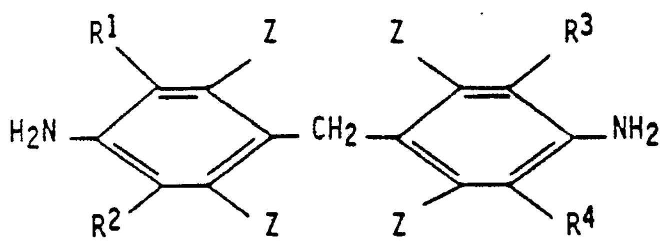 (II)

in which:

the symbols $R^1$, $R^2$, $R^3$ and $R^4$ which may be identical or different, each denote a methyl, ethyl, propyl or isopropyl radical;

the symbols Z, which may be identical or different, each denote a hydrogen atom or a chlorine

atom,
(ii) and the species corresponding to the general formula:

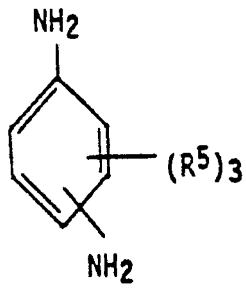

(III)

in which:
the amino radicals are in the meta or para position with respect to one another;
the symbols $R^5$, which are identical or different, each denote a methyl, ethyl, propyl or isopropyl radical;

(c) optionally, one or more monomers other than a bis(imide) of formula (I) and containing one or more polymerisable carbon-carbon double bonds;
and (d) optionally, an imidazole type compound, the quantities of N,N'-bis(imide)(s) (a) and hindered diamine(s) (b) being chosen so that the ratio r:

$$\frac{\text{number of moles of bis(imide(s) (a)}}{\text{number of moles of diamine(s) (b)}}$$

falls within the range from 1.1:1 to 20:1, and preferably within the range from 2:1 to 5:1.

2. Polymers according to claim 1 characterised in that in that the reactant (c), when one is used, comprises the following species:
($c_1$) one or more monomers of formula:

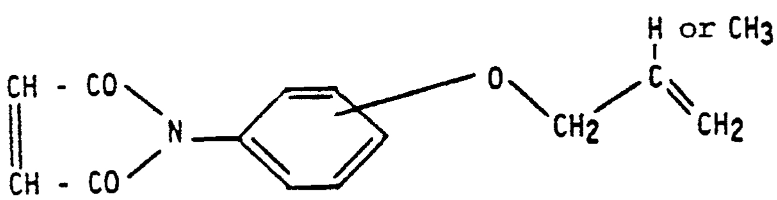

(IV)

in which the allyloxy or methallyloxy radical is in the ortho, meta or para position with respect to the carbon atom of the benzene ring attached to the nitrogen;
($c_2$) a compound comprising:
- a mixture of a monomer of the formula:

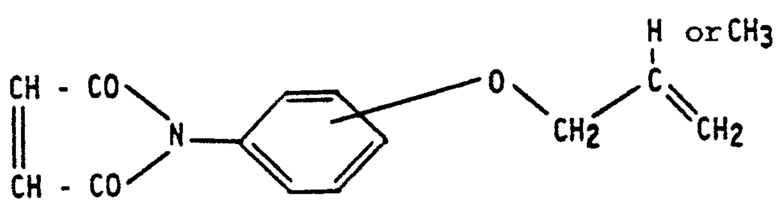

(IV)

in which the allyloxy or methallyloxy radical is in the ortho, meta or para position with respect to the carbon atom of the benzene ring attached to the nitrogen;
- with:
  - at least one monosubstituted derivative of formula:

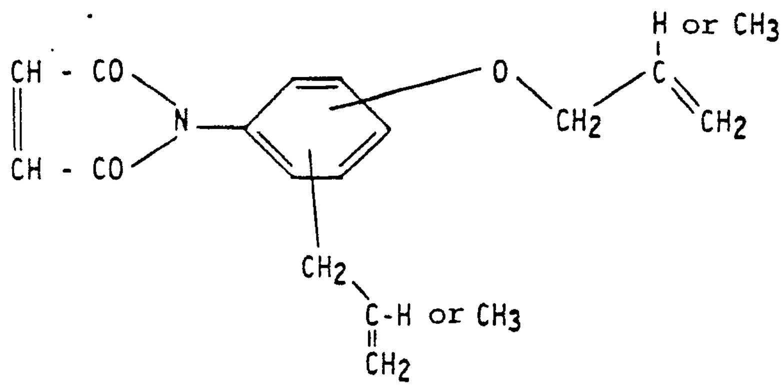

(V)

- and optionally one or more disubstituted derivatives of formula:

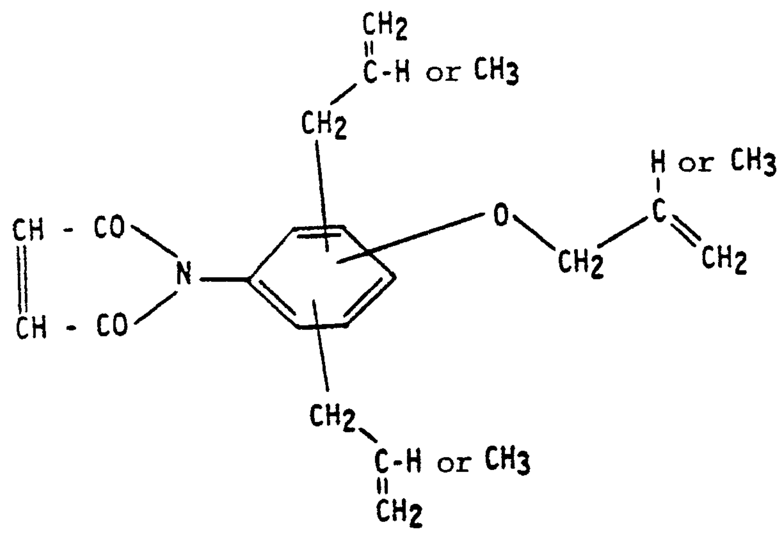

(VI)

($c_3$) one or more substituted heterocyclic compounds, chosen from vinylpyridines, N-vinylpyrrolidone, allyl isocyanurate and vinyltetrahydrofuran.

**3.** Polymers according to either of claims 1 and 2, characterised in that the imidazole derivative (d), when one is used, corresponds to the general formula:

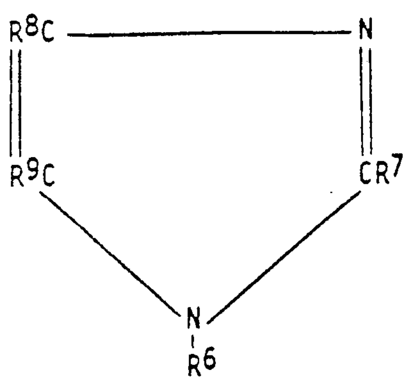

(VII)

in which $R^6$, $R^7$, $R^8$ and $R^9$, which may be identical or different, each denote, a hydrogen atom, an alkyl or alkoxy radical having from 1 to 20 carbon atoms or a vinyl, phenyl or nitro radical, it being possible for $R^8$ to form with $R^9$ and the carbon atoms to which these radicals are bound a single ring such as, for example, a benzene ring, it also being possible for $R^6$ to denote a carbonyl group linked to a second imidazole ring.

**4.** Polymers according to claim 2, characterised in that the quantity of the optional reactant (c) represents less than 60%, and preferably from 5% to 50%, of the total weight of the reactants (a) and (b).

**5.** Polymers according to claim 3, characterised in that the imidazole compound is employed at a level falling within the range from 0.01 to 1% by weight with respect to the combination of reactants (a) + (b) +, optionally, (c), and preferably within the range from 0.05 to 0.5%.

**6.** Polymers according to any one of claims 1 to 5, characterised in that they take the form of cured polymers which are insoluble in solvents such as dioxane, tetrahydrofuran, and dibutyl ether, dimethylformamide, dimethyl sulphoxide, N-methylpyrrolidone, dimethyl-acetamide, cyclohexanone, methyl glycol and methyl ethyl ketone, these polymers not showing significant softening below the temperature at which they begin to decompose.

**7.** Polymers according to any one of claims 1 to 5, characterised in that they take the form of thermosetting prepolymers (P) which are soluble in polar organic solvents and possess a softening point at a temperature below 200 °C.

**8.** Process for preparing cured polymers according to claims 1 to 6, characterised in that the mixture of the reactants is heated directly to a temperature of between 50 °C, and 300 °C.

**9.** Preparation process according to claim 8, characterised in that it consists in heating the mixture of the reactants to between 50 °C and 180 °C to form, in a first stage, a prepolymer (P), and then to induce the curing of the prepolymer (P) by heating to a temperature of between 150 °C and 300 °C.

**10.** Process for preparing thermosetting prepolymers (P) according to claims 1 to 5 and 7, characterised in that the mixture of the reactants is heated directly to a temperature of between 50 °C and 180 °C until a liquid or pasty homogeneous product is obtained.

**11.** Application of the polymers according to any one of claims 1 to 7 to the manufacture of moulded articles, coatings, articles having a cellular structure and reinforced and impregnated composite materials.

**Claims for the following Contracting State : ES**

**1.** Process for preparing polymers containing imide groups that take the form of cured polymers which are insoluble in solvents such as dioxane, tetrahydrofuran, dibutyl ether, dimethylformamide dimethyl sulphoxide, N-methylpyrrolidone, dimethylacetamide, cyclohexanone, methyl glycol and methyl ethyl ketone, and which do not show significant softening below the temperature at which they begin to decompose, characterised in that a mixture of the following reactants is heated directly to a temperature of between 50 °C and 300 °C:

(a) an N,N'-bis(imide) or a combination of several bis(imides) of formula:

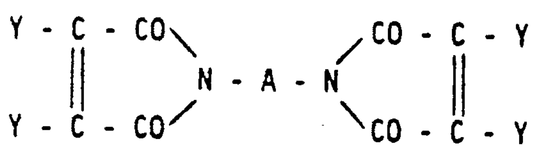

(I)

in which:

the symbols Y, which may be identical or different, each denote H, $CH_3$ or Cl;

the symbol A denotes a divalent radical chosen from the group consisting of the following radicals: cyclohexylenes; phenylenes, 4-methyl-1,3-phenylene; 2-methyl-1,3-phenylene; 5-methyl-1,3-phenylene; 2,5-diethyl-3-methyl-1,4-phenylene; and the radicals of formula:

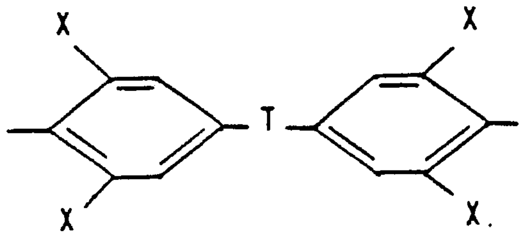

in which T denotes a single valency bond or a group:

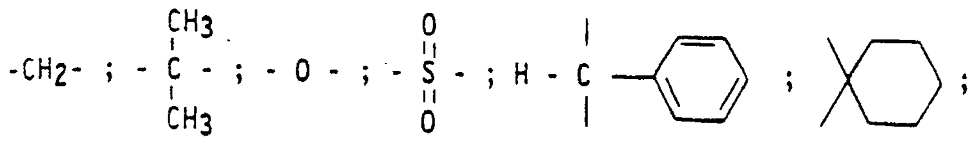

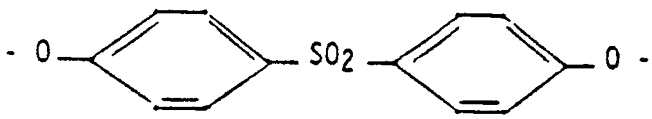

and the symbols X, which may be identical or different, each denote a hydrogen atom or a methyl, ethyl or isopropyl radical;

(b) one or more hindered diprimary diamines selected from the group composed of:

(i) the species corresponding to the general formula:

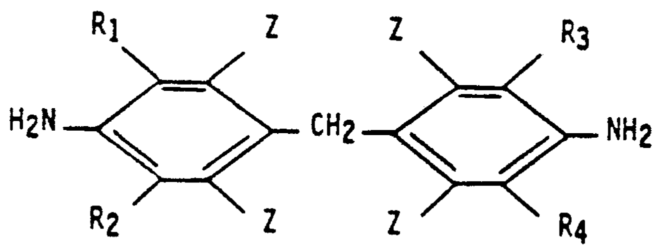 (II)

in which

the symbols $R_1$, $R_2$, $R_3$ and $R_4$ which may be identical or different, each denote a methyl, ethyl, propyl or isopropyl radical;

the symbols Z, which may be identical or different, each denote a hydrogen atom or a chlorine atom;

(ii) and the species corresponding to the general formula:

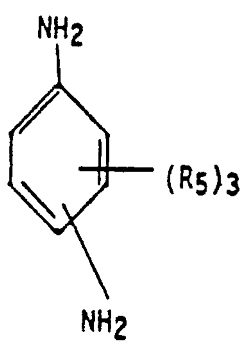 (III)

in which:
the amino radicals are in the meta or para position with respect to one another;
the symbols $R_5$, which are identical or different, each denote a methyl, ethyl, propyl or isopropyl radical;
(c) optionally, one or more monomers other than a bis(imide) of formula (I) and containing one or more polymerisable carbon-carbon double bonds;
and (d) optionally, an imidazole type compound; the quantities of N,N'-bis(imide)(s) (a) and hindered diamine(s) (b) being chosen so that the ratio r:

$$\frac{\text{number of moles of bis(imide)(s) (a)}}{\text{number of moles of diamine(s) (b)}}$$

falls within the range from 1:1 to 20:1, and preferably within the range from 2:1 to 5:1.

2. Process for preparing polymers containing imide groups that take the form of thermosetting prepolymers (P) which are soluble in polar organic solvents and possess a softening point at a temperature below 200 °C, characterised in that the mixture of the reactants (a), (b), and, optionally (c) and (d), defined above in claim 1, is heated directly to a temperature of between 50 °C and 180 °C until a liquid or pasty homogeneous product is obtained.

3. Process according to claim 1, characterised in that in that it consists in heating the mixture of the reactants to between 50 °C and 180 °C to form, in a first stage, a prepolymer (P), and then to induce the curing of the prepolymer (P) by heating to a temperature of between 150 °C and 300 °C.

4. Process according to any one of claims 1 to 3, characterised in that the reactant (c), when one is used, comprises the following species:
($C_1$) one or more monomers of formula:

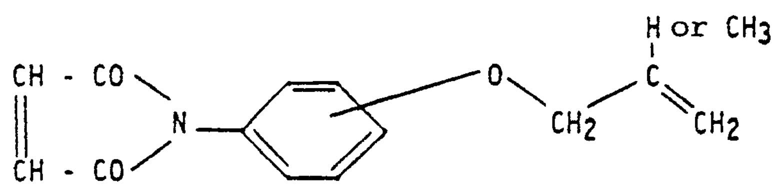
(IV)

in which the allyloxy or methallyloxy radical is in the ortho, meta or para position with respect to the carbon atom of the benzene ring attached to the nitrogen;
($c_2$) a compound comprising:
- a mixture of a monomer of the formula:

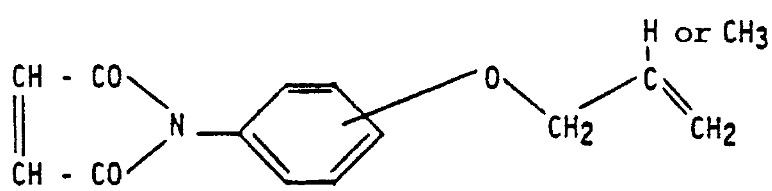
(IV)

in which the allyloxy or methallyloxy radical is in the ortho, meta or para position with respect to the carbon atom of the benzene ring attached to the nitrogen;
- with:
  - at least one monosubstituted derivative of formula:

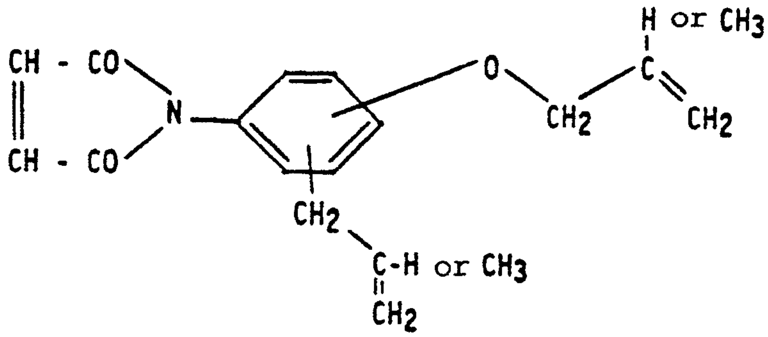

(V)

- and optionally one or more disubstituted derivatives of formula:

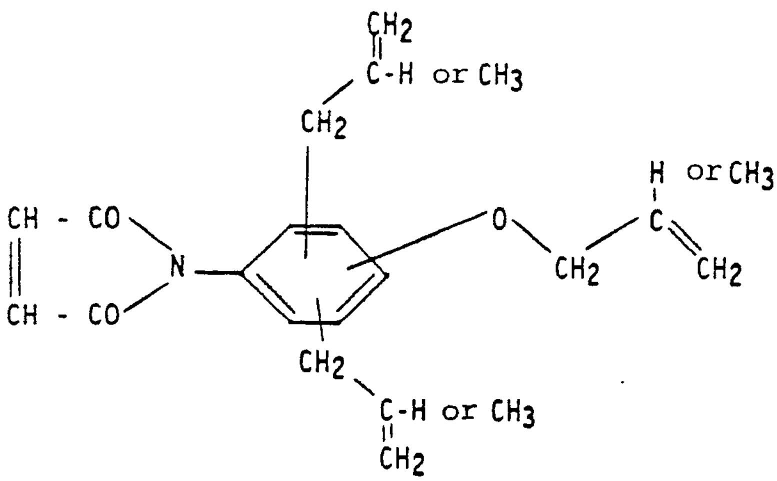

(VI)

($c_3$) one or more substituted heterocyclic compounds, chosen from vinylpyridines, N-vinylpyrrolidone, allyl isocyanurate and vinyltetrahydrofuran.

5. Process according to any one of claims 1 to 4, characterised in that the imidazole derivative (d), when one is used, corresponds to the general formula:

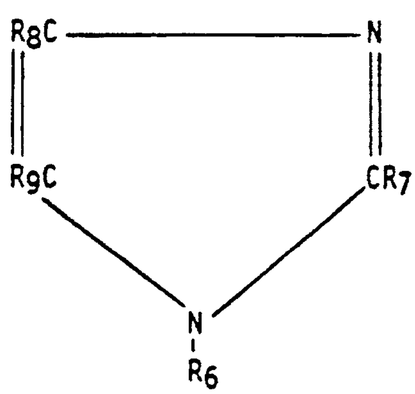

(VII)

in which $R_6$ $R_7$, $R_8$ and $R_9$, which may be identical or different, each denote a hydrogen atom, an alkyl or alkoxy radical having from 1 to 20 carbon atoms or a vinyl, phenyl or nitro radical, it being possible for $R_8$ to form with $R_9$ and the carbon atoms to which these radicals are bound a single ring such as, for example, a benzene ring, it also being possible for $R_6$ to denote a carbonyl group linked to a second imidazole ring.

6. Process according to claim 4, characterised in that the quantity of the optional reactant (c) represents less than 60%, and preferably from 5% to 50%, of the total weight of the reactants (a) and (b).

7. Process according to claim 5, characterised in that the imidazole compound is employed at a level falling within the range from 0.01 to 1% by weight with respect to the combination of reactants (a) + (b) +, optionally, (c), and preferably within the range from 0.05 to 0.5%.

8. Application of the polymers prepared according to any one of claims 1 to 7 to the manufacture of moulded articles, coatings, articles having a cellular structure and reinforced and impregnated composite materials.

**Patentansprüche**
**Patentansprüche für folgende Vertragsstaaten : AT, BE, CH, DE, FR, GB, IT, LI, LU, NL, SE**

1. Polymere mit Imidgruppen, dadurch gekennzeichnet, daß sie das Produkt der Reaktion bei einer Temperatur von 50° C bis 300° C umfassen zwischen:
   - (a) einem N,N'-Bis-imid oder einer Assoziation mehrerer Bis-imide der Formel

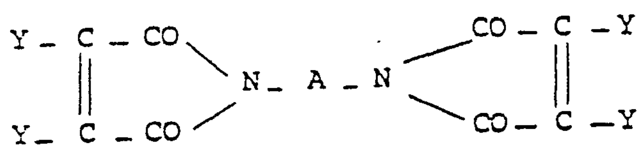

(I)

worin:
. die Symbole Y, die identisch oder verschieden sind, jeweils H, $CH_3$ oder Cl bedeuten;
. das Symbol A einen zweiwertigen Rest bedeutet, ausgewählt aus der Gruppe, bestehend aus den Resten: Cyclohexylen; Phenylen; 4-Methyl-1,3-phenylen; 2-Methyl-1,3-phenylen; 5-Methyl-1,3-phenylen; 2,5-Diethyl-3-methyl-1,4-phenylen; und den Resten der Formel:

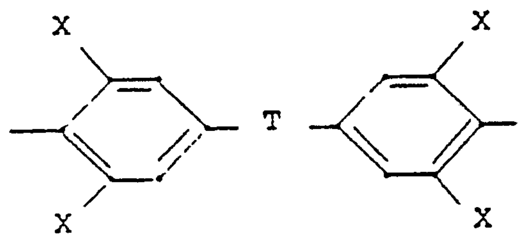

worin T eine einfache Valenzbindung oder eine Gruppe:

$-CH_2-$ ; 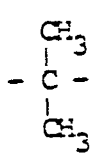 ; $-O-$ ; 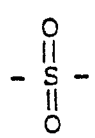 ; 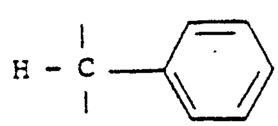 ; 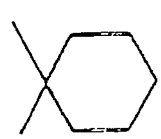 ;

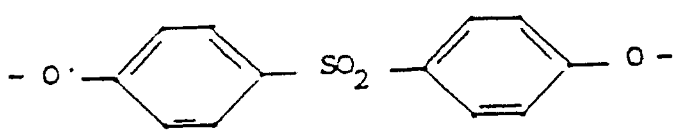

bedeutet und die Symbole X, die identisch oder verschieden sind, jeweils ein Wasserstoffatom, einen Methyl-, Ethyl- oder Isopropylrest darstellen;
   - (b) einen oder mehreren sperrigen, biprimären Diaminen, genommen aus der Gruppe, bestehend aus:
   (i) den Arten entsprechend der allgemeinen Formel

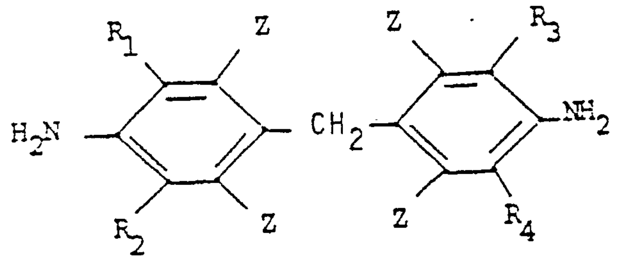

(II)

worin:

- die Symbole $R_1$, $R_2$, $R_3$ und $R_4$, die identisch oder verschieden sind, jeweils einen Methyl-, Ethyl-, Propyl- oder Isopropylrest darstellen;
- die Symbole Z, die identisch oder verschieden sind, jeweils ein Wasserstoffatom oder ein Chloratom bedeuten;

(2i) und den Arten entsprechend der allgemeinen Formel:

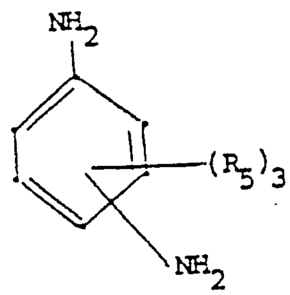

(III)

worin:

- die Aminoreste in meta- oder para-Stellung, das eine in bezug auf das andere, sind;
- die Symbole $R_5$, die identisch oder verschieden sind, jeweils einen Methyl-, Ethyl-, Propyl- oder Isopropylrest bedeuten;

- (c) gegebenenfalls einen oder mehreren Monomeren, anders als ein Bis-imid der Formel (I) und mit einer oder mehreren polymerisierbaren Kohlenstoff-Kohlenstoff-Doppelbindungen;
- und (d) gegbenenfalls einer Verbindung vom Imidazol-Typ,

wobei die Mengen an N ,N'-Bis-imid(en) (a) und sperrigem (sperrigen) Diamin(en) (b) derart gewählt sind, daß das Verhältnis r:

$$\frac{\text{Anzahl der Mole an Bis-imid(en) (a)}}{\text{Anzahl der Mole an Diamin(en) (b)}}$$

in dem Bereich von 1,1/1 bis 20/1 und vorzugsweise 2/1 bis 5/1 liegt.

**2.** Polymere gemäß Anspruch 1, dadurch gekennzeichnet, daß der Reaktant (c), wenn man ihn verwendet, aus den folgenden Arten besteht:

($c_1$) einem oder mehreren Monomeren der Formel:

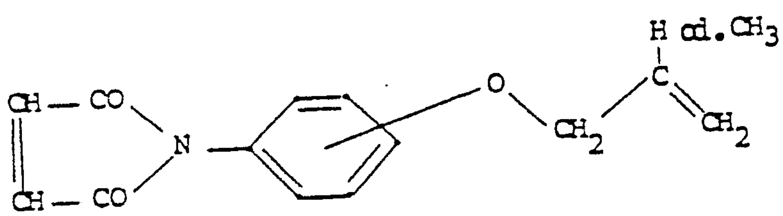

(IV)

worin der Allyloxy- oder Methallyloxyrest in ortho-, meta- oder para-Stellung steht in bezug auf das

Kohlenstoffatom des Benzolringes, das mit den Stickstoff verbunden ist;
($c_2$) einerVerbindung, enthaltend:
- ein Gemisch eines Monomeren der Formel

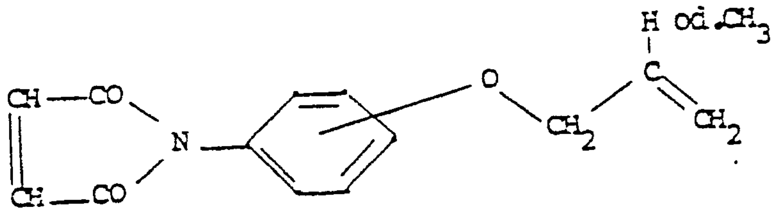

(IV)

worin der Allyloxy- oder Methallyloxyrest in ortho-, meta- oder para-Stellung steht in bezug auf das Kohlenstoffatom des Benzolringes, das mit den Stickstoff verbunden ist;
- mit:
. mindestens einem monosubstituierten Derivat der Formel

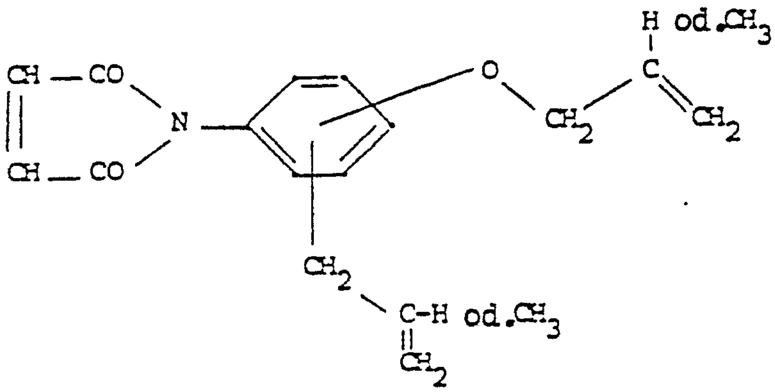

(V)

. und gegebenenfalls einem oder mehreren disubstituierten Derivaten der Formel:

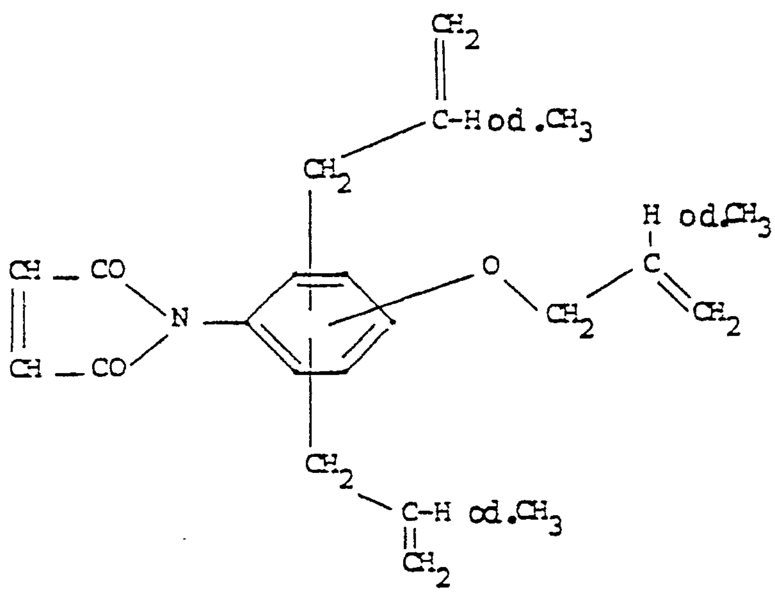

(VI)

($c_3$) einem oder mehreren substituierten Heterocyclen,ausgewählt unter den Vinylpyridinen, N-Vinylpyrrolidon, Allylisocyanurat, Vinyltetrahydrofuran.

3. Polymere gemäß einem der Ansprüche 1 und 2, dadurch gekennzeichnet, daß das Imidazolderivat (d),

wenn man es verwendet, der allgemeinen Formel:

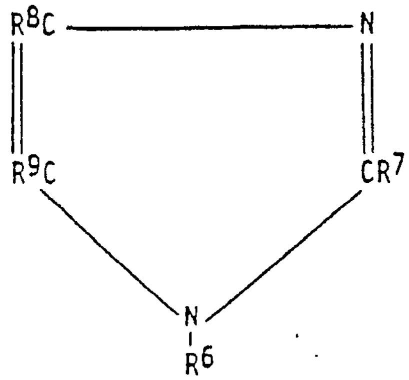

(VII)

entspricht, worin $R^6$, $R^7$, $R^8$ und $R^9$, die identisch oder verschieden sind, jeweils bedeuten: ein Wasserstoffatom, einen Alkyl- oder Alkoxyrest mit 1 bis 20 Kohlenstoffatomen, Vinyl, Phenyl, Nitro, wobei $R^8$ mit $R^9$ und den Kohlenstoffatomen, an das diese Reste gebunden sind, einen einkernigen Ring bilden, wie beispielsweise einen Benzolring, wobei $R^6$ auch eine Carbonylgruppe, gebunden an einen zweiten Imidazolring, darstellen kann.

**4.** Polymere gemäß Anspruch 2, dadurch gekennzeichnet, daß die Menge des fakultativen Reaktanten (c) weniger als 60% und vorzugsweise 5 bis 50% des Gesamtgewichts der Reaktanten (a) und (b) darstellt.

**5.** Polymere gemäß Anspruch 3, dadurch gekennzeichnet, daß man die Imidazol-Verbindung in einem Maße verwendet, welches in dem Bereich von 0,01 bis 1 Gew.% in bezug auf die Gesamtheit der Reaktanten (a) + (b) + gegebenenfalls (c) und vorzugsweise von 0,05 bis 0,5% geht.

**6.** Polymere gemäß einem der Ansprüche 1 bis 5, dadurch gekennzeichnet, daß sie sich in Form von gehärteten Polymeren befinden, die in den Lösungsmitteln, wie Dioxan, Tetrahydrofuran und Dibutylether, Dimethylformamid, Dimethylsulfoxid, N-Methylpyrrolidon, Dimethylacetamid, Cyclohexanon, Methylglykol und Methylethylketon, unlöslich sind, wobei diese Polymeren keine merkliche Erweichung unterhalb der Temperatur, bei der sie sich zu zersetzen beginnen, aufweisen.

**7.** Polymere gemäß einem der Ansprüche 1 bis 5, dadurch gekennzeichnet, daß sie sich in Form von wärmehärtbaren Präpolymeren (P) befinden, die in den polaren, organischen Lösungsmitteln löslich sind und einen Erweichungspunkt bei einer Temperatur unterhalb 200 °C aufweisen.

**8.** Verfahren zur Herstellung von gehärteten Polymeren gemäß den Ansprüchen 1 bis 6, dadurch gekennzeichnet, daß man das Gemisch der Reaktanten direkt auf eine Temperatur zwischen 50 °C und 300 °C erhitzt.

**9.** Herstellungsverfahren gemäß Anspruch 8, dadurch gekennzeichnet, daß es darin besteht, das Gemisch der Reaktanten zwischen 50 °C und 180 °C zu erhitzen, um in einer ersten Stufe ein Präpolymeres (P) zu bilden, dann die Härtung des Präpolymeren (P) durch Erhitzen auf eine Temperatur zwischen 150 °C und 300 °C zu bewirken.

**10.** Verfahren zur Herstellung von wärmehärtbaren Präpolymeren (P) gemäß den Ansprüchen 1 bis 5 und 7, dadurch gekennzeichnet, daß man das Gemisch der Reaktanten direkt auf eine Temperatur zwischen 50 °C und 180 °C erhitzt bis zur Erzielung eines flüssigen oder pastösen, homogenen Produkts.

**11.** Verwendung der Polymeren gemäß einem der Ansprüche 1 bis 7 zur Herstellung von geformten Erzeugnissen, Überzügen, Erzeugnissen mit Zellstruktur und verstärkten und imprägnierten Verbundmaterialien.

**Patentansprüche für folgenden Vertragsstaat : ES**

**1.** Verfahren zur Herstellung von Polymeren mit Imidgruppen, die sich in Form von gehärteten Polymeren befinden, die in Lösungsmitteln unlöslich sind, wie Dioxan, Tetrahydrofuran, Dibutylether, Dimethylformamid, Dimethylsulfoxid, N-Methylpyrrolidon, Dimethylacetamid, Cyclohexanon, Methylglykol und Methylethylketon, und keine merkliche Erweichung unterhalb der Temperatur, bei der sie sich zu zersetzen beginnen, aufweisen, dadurch **gekennzeichnet,** daß man direkt auf eine Temperatur zwischen 50° C und 300° C das Gemisch der folgenden Reaktanten erhitzt:

- (a) ein N,N'-Bis-imid oder eine Assoziation mehrerer Bis-imide der Formel

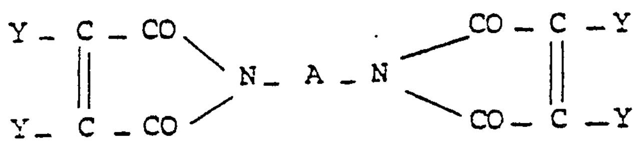

(I)

worin:

. die Symbole Y, die identisch oder verschieden sind, jeweils H, $CH_3$ oder Cl bedeuten;

. das Symbol A einen zweiwertigen Rest bedeutet, ausgewählt aus der Gruppe, bestehend aus den Resten: Cyclohexylen; Phenylen; 4-Methyl-1,3-phenylen; 2-Methyl-1,3-phenylen; 5-Methyl-1,3-phenylen; 2,5-Diethyl-3-methyl-1,4-phenylen; und den Resten der Formel:

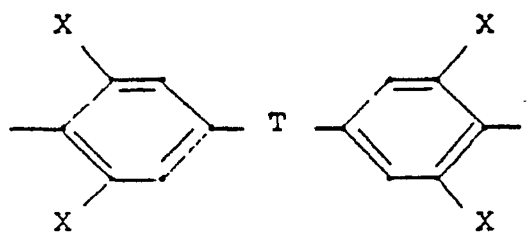

worin T eine einfache Valenzbindung oder eine Gruppe:

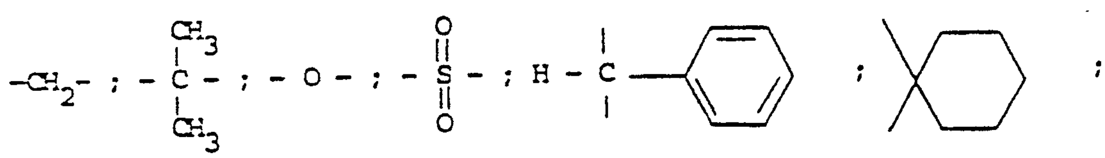

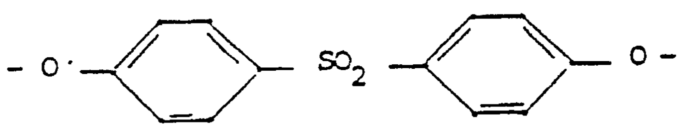

bedeutet und die Symbole X, die identisch oder verschieden sind, jeweils ein Wasserstoffatom, einen Methyl-, Ethyl- oder Isopropylrest darstellen;

- (b) ein oder mehrere sperrige, biprimäre Diamine genommen aus der Gruppe, bestehend aus:
  (i) den Arten entsprechend der allgemeinen Formel

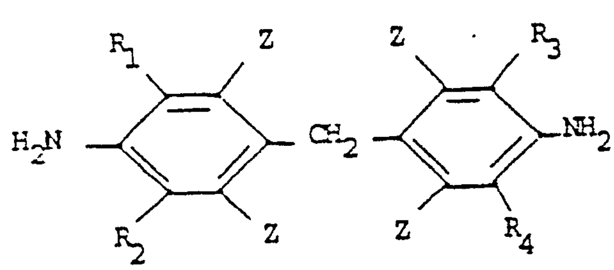

(II)

worin:

. die Symbole $R_1$, $R_2$, $R_3$ und $R_4$, die identisch oder verschieden sind, jeweils einen Methyl-, Ethyl-, Propyl- oder Isopropylrest darstellen;

. die Symbole Z, die identisch oder verschieden sind, jeweils ein Wasserstoffatom oder ein Chloratom bedeuten;

(2i) und den Arten entsprechend der allgemeinen Formel:

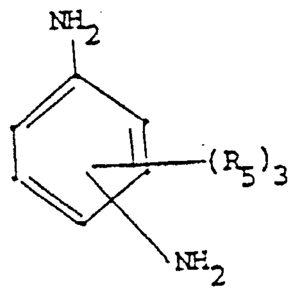

(III)

worin:

. die Aminoreste in meta- oder para-Stellung, das eine in bezug auf das andere, sind;

. die Symbole $R_5$, die identisch oder verschieden sind, jeweils einen Methyl-, Ethyl-, Propyl- oder Isopropylrest bedeuten;

- (c) gegebenenfalls ein oder mehrere Monomere, anders als ein Bis-imid der Formel (I) und mit einer oder mehreren polymerisierbaren Kohlenstoff-Kohlenstoff-Doppelbindungen;
- und (d) gegebenenfalls eine Verbindung vom Imidazol-Typ,
- wobei die Mengen an N ,N'-Bis-imid(en) (a) und sperrigem(n) Diamin(en) (b) derart ausgewählt sind, daß das Verhältnis r:

$$\frac{\text{Anzahl der Mole Bis-imid(e) (a)}}{\text{Anzahl der Mole Diamin(e) (b)}}$$

in dem Bereich von 1,1/1 bis 20/1 und vorzugsweise von 2/1 bis 5/1 liegt.

**2.** Verfahren zur Herstellung von Polymeren mit Imidgruppen, die sich in Form von wärmehärtbaren Präpolymeren (P) befinden, die in den polaren organischen Lösungsmitteln löslich sind und einen Erweichungspunkt bei einer Temperatur unterhalb 200 °C aufweisen, dadurch gekennzeichnet, daß man das Gemisch der Reaktanten (a), (b) und gegebenenfalls (c) und (d), die vorstehend in Anspruch 1 definiert sind, auf eine Temperatur zwischen 50 °C und 180 °C erhitzt bis zur Erzielung eines flüssigen oder pastösen, homogenen Produkts.

**3.** Verfahren gemäß Anspruch 1, dadurch gekennzeichnet, daß es darin besteht, das Gemisch der Reaktanten zwischen 50 °C und 180 °C zu erhitzen, um zunächst ein Präpolymeres (P) zu bilden, dann das Härten des Präpolymeren (P) durch Erhitzen auf eine Temperatur zwischen 150 °C und 300 °C zu bewirken.

**4.** Verfahren gemäß einem der Ansprüche 1 bis 3, dadurch gekennzeichnet, daß der Reaktant (c), wenn er verwendet wird, aus den folgenden Arten besteht:

($c_1$) einem oder mehreren Monomeren der Formel:

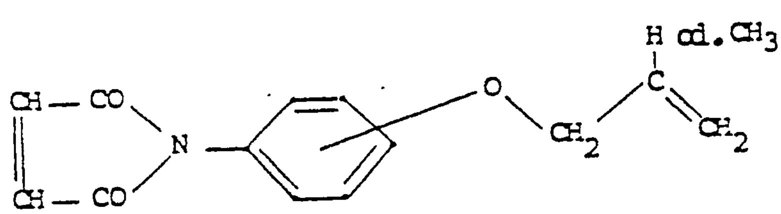

(IV)

worin der Allyloxy- oder Methallyloxyrest in ortho-, meta- oder para-Stellung steht in bezug auf das Kohlenstoffatom des Benzolringes, das mit dem Stickstoff verbunden ist;

($c_2$) einer Verbindung, enthaltend:

- ein Gemisch eines Monomeren der Formel

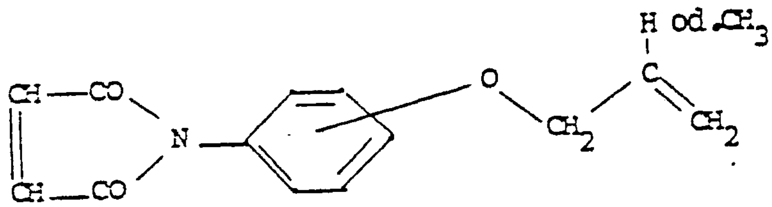

(IV)

worin der Allyloxy- oder Methallyloxyrest in ortho-, meta- oder para-Stellung steht in bezug auf das Kohlenstoffatom des Benzolringes, das mit dem Stickstoff verbunden ist;

- mit:

. mindestens einem monosubstituierten Derivat der Formel

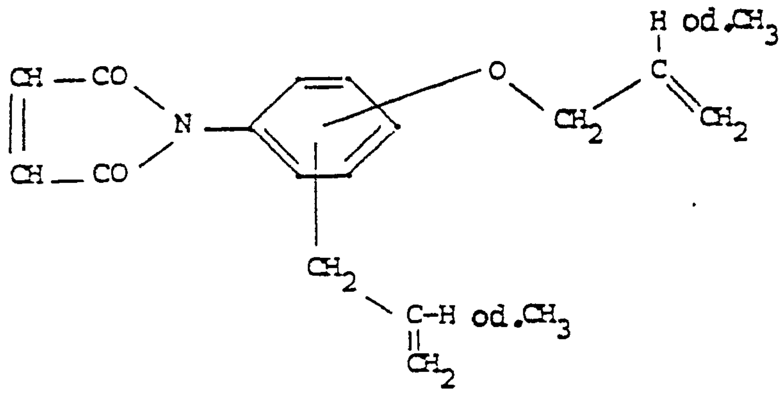

(V)

. und gegebenenfalls einem oder mehreren disubstituierten Derivaten der Formel:

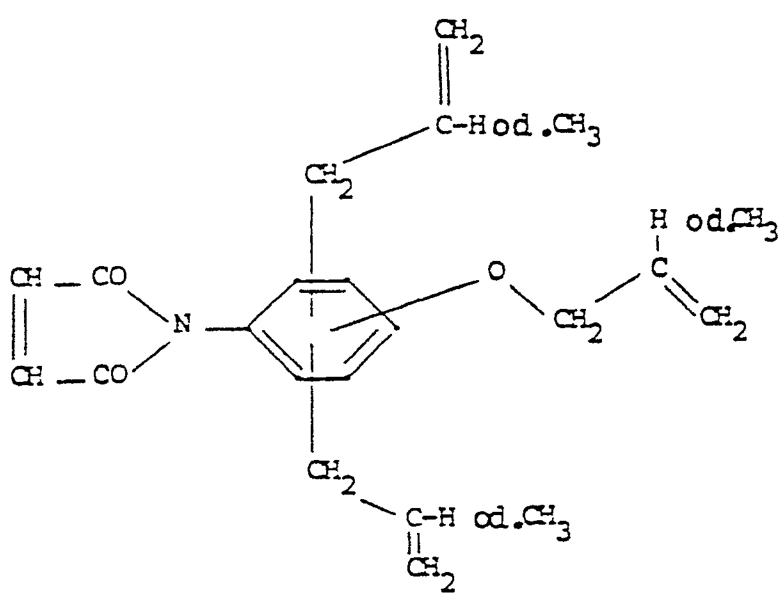

(VI)

($c_3$) einem oder mehreren substituierten Heterocyclen, ausgewählt unter den Vinylpyridinen, N-Vinylpyrrolidon, Allylisocyanurat und Vinyltetrahydrofuran.

**5.** Verfahren gemäß einem der Ansprüche 1 bis 4, dadurch gekennzeichnet, daß das Imidazolderivat (d),

wenn man es verwendet, der allgemeinen Formel

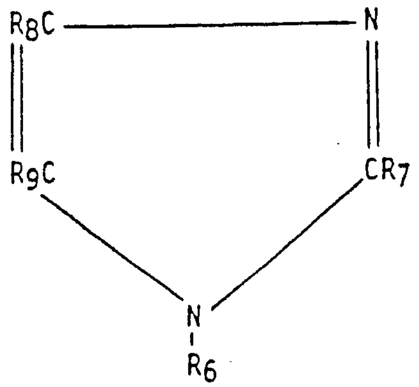

(VII)

entspricht, worin $R_6$, $R_7$, $R_8$ und $R_9$, die identisch oder verschieden sind, jeweils bedeuten: ein Wasserstoffatom, einen Alkyl- oder Alkoxyrest mit 1 bis 20 Kohlenstoffatomen, Vinyl, Phenyl, Nitro, wobei $R_8$ mit $R_9$ und den Kohlenstoffatomen, an die diese Reste gebunden sind, einen einkernigen Ring bilden können, wie beispielsweise einen Benzolring, wobei $R_6$ auch eine Carbonylgruppe, gebunden an einen zweiten Imidazolring, darstellen kann.

6. Verfahren gemäß Anspruch 4, dadurch gekennzeichnet, daß die Menge des fakultativen Reaktanten (c) weniger als 60% und vorzugsweise 5 bis 50% des Gesamtgewichts der Reaktanten (a) und (b) darstellt.

7. Verfahren gemäß Anspruch 5, dadurch gekennzeichnet, daß man die Imidazolverbindung in einer Menge verwendet, die in dem Bereich von 0,01 bis 1 Gew.% in bezug auf die Gesamtheit der Reaktanten (a) + (b) + gegebenenfalls (c) und vorzugsweise von 0,05 bis 0,5% liegt.

8. Anwendung der gemäß einem der Ansprüche 1 bis 7 hergestellten Polymeren zur Erzeugung von geformten Gegenständen, Überzügen, Erzeugnissen mit Zellstruktur und verstärken und imprägnierten Verbundmaterialien.